# NOUVEAU FASCICULE DE BREVET EUROPEEN

(11) **EP 0 991 683 B2**
(45) Date de publication et mention de la décision concernant l'opposition: **09.05.2007**
(45) Mention de la délivrance du brevet: 09.10.2002
(21) Numéro de dépôt: 98933688.8
(22) Date de dépôt: 23.06.1998
(51) Int. Cl.: C08F 293/00, C08F 2/38, C07C 329/16

(54) **PROCEDE DE SYNTHESE DE POLYMERES A BLOCS PAR POLYMERISATION RADICALAIRE CONTROLEE**
VERFAHREN ZUR HERSTELLUNG VON BLOCKCOPOLYMEREN DURCH KONTROLLIERTE RADIKALISCHE POLYMERISATION
METHOD FOR BLOCK POLYMER SYNTHESIS BY CONTROLLED RADICAL POLYMERISATION

(30) Priorité: 23.06.1997 FR 9707764
(43) Date de publication de la demande: 12.04.2000
(73) Titulaire: RHODIA CHIMIE, 92408 Courbevoie Cédex (FR)
(72) Inventeur: CORPART, Pascale, F-95110 Sannois (FR); CHARMOT, Dominique, F-93310 Le Pré Saint Gervais (FR); BIADATTI, Thibaud, F-06650 Opio (FR); ZARD, Samir, F-91190 Gif sur Yvette (FR); MICHELET, Daniel, 06200 Nice (FR)
(74) Mandataire: Delenne, Marc
(86) Numéro de dépôt international: PCT/FR1998/001316
(87) Numéro de publication internationale: WO 1998/058974

(56) Documents cités:
- EP-A- 0 348 166
- EP-A- 0 582 183
- EP-B- 0 910 587
- US-A- 2 396 997
- M. OKAWARA ET AL.: "syntheses and photochemical reactions of polymers containing dithiocarbamate and xanthate groups and their model compounds" BULLETIN OF THE TOKYO INSTITUTE OF TECHNOLOGY, no. 78, 1966, page 1-16 XP002049822 JP
- H. SINGER ET AL.: "alpha, omega funktionalisierte oligomere-..." FASERFORSCHUNG UND TEXTIL TECHNIEK, vol. 28, no. 9, 1977, pages 435-438, XP002049825
- S. SURYAWANSHI ET AL.: "mild and efficient conversion of allylic alcohols to xanthates" SYNTHETIC COMMUNICATIONS, vol. 20, no. 5, 1990, pages 625-632, XP002049823
- H. YOSHIDA ET AL.: "the conversion of some alkylxanthates to the corresponding trithiocarbonates..." BULLETIN OF THE CHEMICAL SOC. OF JAPAN, vol. 44, 1971, pages 3106-3108, XP002049824

## Description

La présente invention concerne un nouveau procédé de polymérisation radicalaire donnant accès à des copolymères à blocs.

Les polymères à blocs sont habituellement préparés par polymérisation ionique. Ce type de polymérisation présente l'inconvénient de ne permettre la polymérisation que de certains types de monomères apolaires, notamment le styrène et le butadiène, et de requérir un milieu réactionnel particulièrement pur et des températures souvent inférieures à l'ambiante de manière à minimiser les réactions parasites, d'où des contraintes de mise en oeuvre sévères.

La polymérisation radicalaire présente l'avantage d'être mise en oeuvre facilement sans que des conditions de pureté excessives soient respectées et à des températures égales ou supérieures à l'ambiante. Cependant, jusqu'à récemment il n'existait pas de procédé de polymérisation radicalaire permettant d'obtenir des polymères à blocs.

Depuis, un nouveau procédé de polymérisation radicalaire s'est développé : il s'agit de la polymérisation radicalaire dite "contrôlée" ou "vivante". La polymérisation radicalaire contrôlée procède par croissance par propapagation de macroradicaux. Ces macroradicaux, dotés d'un temps de vie très faible, se recombinent de façon irréversible par couplage ou dismutation. Lorsque la polymérisation se déroule en présence de plusieurs comonomères, la variation de composition du mélange est infiniment faible devant le temps de vie du macroradical de sorte que les chaînes présentent un enchaînement des unités monomères statistique et non un enchaînement séquencé.

Récemment des techniques de polymérisation radicalaire contrôlée ont été mises au point, dans lesquelles les extrémités de chaînes de polymères peuvent être réactivées sous forme de radical par scission homolytique de liaison (par exemple C-O, ou C-Halogène).

La polymérisation radicalaire contrôlée présente donc les aspects distinctifs suivants :
1. le nombre de chaînes est fixe pendant toute la durée de la réaction,
2. les chaînes croissent toutes à la même vitesse, ce qui se traduit par :
   - une augmentation linéaire des masses moléculaires avec la conversion,
   - une distribution des masses resserrée,
3. la masse moléculaire moyenne est contrôlée par le rapport molaire monomère /précurseur de chaîne,
4. la possibilité de préparer des copolymères à blocs.

Le caractère contrôlé est d'autant plus marqué que la vitesse de réactivation des chaînes en radical est très grande devant la vitesse de croissance des chaînes (propagation). Il existe des cas où ce n'est pas toujours vrai (i.e. la vitesse de réactivation des chaînes en radical est supérieure ou égale à la vitesse de propagation) et les conditions 1 et 2 ne sont pas observées, néanmoins, il est toujours possible de préparer des copolymères à blocs.

Plusieurs approches ont été décrites pour contrôler la polymérisation radicalaire. La plus couramment citée consiste à introduire dans le milieu des contre-radicaux qui se combinent de façon réversible avec les macroradicaux en croissance, comme par exemple les radicaux nitroxyles (Georges *et al*., *Macromolecules,* **26**, 2987,(1993)). Cette technique est caractérisée par des température élevées pour labiliser la liaison C-O.

Une autre méthode appelée *Atom Transfer Radical Polymerization* fait appel à des sels de métaux de transition associés à des ligands organiques et un amorçeur constitué généralement d'un halogènure organique ; le contrôle de la polymérisation est rendu possible par la réversibilité de la liaison C-Halogène (Matyjaszewski K., *PCT WO 96*/*30421).* Un inconvénient de cette polymérisation est qu'il reste une quantité stoechiométrique de métal par chaîne.

Otsu (Otsu *et al*., *Makromol*. *Chem. Rapid Comm*.,**3**,127-132,(1982), Otsu *et al. ibid*, **3**,123-140,(1982), Otsu *et al*., *Polymer Bull*., **7**,45,(1984), *ibid*, **11**,135,(1984), Otsu *et al*, *J.Macromot. Sci. Chem.,* **A21**,961,(1984), Otsu *et al*., *Macromolecules,* **19**,2087,(1989)), a montré que certains sulfures organiques, particulièrement les dithiocarbamates, permettaient sous irradiation UV de faire croître des chaînes de façon contrôlée, selon le principe :

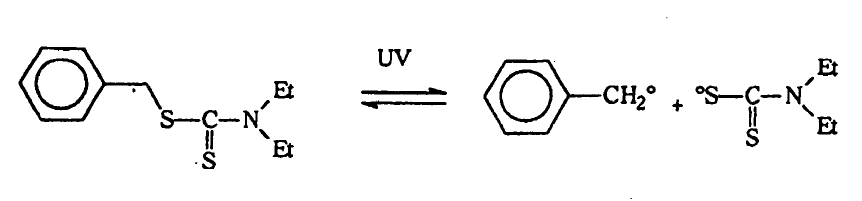

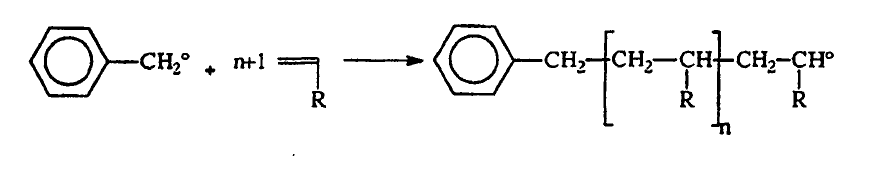

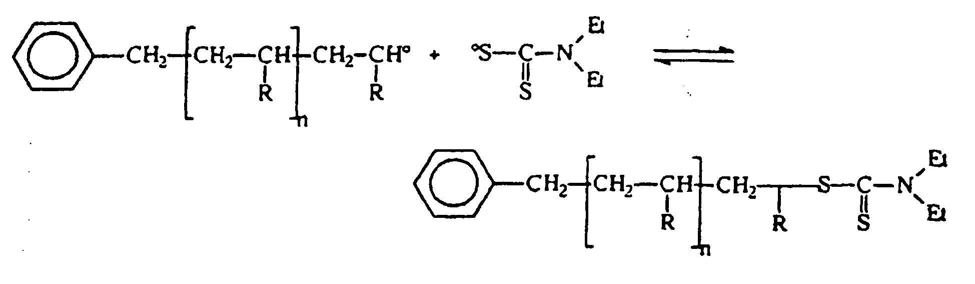

Le principe repose sur la photolyse de la liaison C-S qui régénère le macroradical carboné, d'une part, et le radical dithiocarbamyl, d'autre part. Le caractère contrôlé de la réaction est dû à la réversibilité de la liaison C-S sous irriadiation UV. Il est ainsi possible d'obtenir des copolymères à blocs. En revanche la constante d'équilibre de la réaction 1 ci-dessus n'est pas très grande par rapport à la vitesse de propagation ce qui a pour conséquence de générer des distributions en masses moléculaires relativement larges. Ainsi, l'indice de dispersion (Id = Mw/Mn) est compris entre 2 et 5 (Otsu *et al.*, **25**,7/8,643-650,(1989)).

Les disulfures de xanthates et de dithiocarbamates sont eux-mêmes bien connus comme agents de transferts en polymérisation radicalaire conventionnelle en mode thermique et en présence d'amorçeur, mais aucun n'a permis à ce jour de contrôler la polymérisation, encore moins de produire des copolymères à blocs.

Jusqu' à présent il était connu que les disulfures (tetra-alkylthiurame disulfure, diisopropylxanthate disulfure, mercaptobenzothiazole disulfure) étaient activables thermiquement ou sous irradiation UV, alors que les monosulfures (dithiocarbamates, xanthates substitués) étaient activables uniquement sous irradiation UV (Roha *et al*., *Macromol. Symp.,* **91**, 81-92, (1995), Okawara *et al*., Bull. of the Tokyo Inst. of Techn., n° 78, 1966).

La polymérisation radicalaire contrôlée faisant appel à une source d'irradiation UV est cependant très difficile à mettre en oeuvre, particulièrement d'un point de vue industriel, car la pénétration des photons UV dans le milieu de polymérisation est limitée, tant par des phénomènes d'absorption (la plupart des monomères éthyléniques adsorbent dans la plage 210-280 nm), que par les phénomènes de diffusion dans les milieux dispersés (suspension, émulsion).

D'autre part, il a été montré (Tumer *et al*., *Macromolecules,* ,23,1856-1859, (1990)) que la photopolymérisation en présence de dithiocarbamate génère du disulfure carbone et peut s'accompagner d'une perte de contrôle de la polymérisation.

Pour ces raisons, on cherche donc à développer une technique permettant d'accéder à des copolymères à blocs par un procédé sans irradiation UV, de préférence par amorçage thermique. Or, à ce jour, aucun système de polymérisation radicalaire contrôlé n'a pu être mis en évidence avec des composés dithio en l'absence de source UV.

La polymérisation radicalaire contrôlée présente un avantage sur la polymérisation radicalaire conventionnelle lorsqu'il s'agit de préparer des chaînes de bas poids moléculaires et fonctionnalisées (télomères réactifs). De tels polymères sont recherchés pour des applications spécifiques telles que, par exemple, revêtements et adhésifs.

Ainsi, lorsque l'on cherche à synthétiser des chaînes greffées avec en moyenne 2 comonomères fonctionnels, la fraction de chaînes avec au plus un site fonctionnel devient importante quand le degré de polymérisation moyen est inférieur à une valeur seuil (e.g. 20 ou 30). La polymérisation radicalaire contrôlée permet, elle, de réduire, voire inhiber, la formation de ces oligomères à zéro ou un site fonctionnel qui dégradent les performances en application.

Un but de la présente invention est de proposer un nouveau procédé de polymérisation radicalaire contrôlée pour la synthèse de polymères à blocs.

Un autre but de la présente invention est de proposer un nouveau procédé de polymérisation radicalaire contrôlée pour la synthèse de polymères à blocs en l'absence de source UV.

Un autre but est de proposer un procédé de polymérisation radicalaire contrôlée pour la synthèse de polymères à blocs à partir de tous types de monomères.

Un autre but est de proposer un procédé de polymérisation radicalaire contrôlée pour la synthèse de polymères à blocs ne contenant pas d'impuretés métalliques néfastes à leur utilisation.

Un autre but est de proposer un procédé de polymérisation radicalaire contrôlée pour la synthèse de copolymères à blocs, lesdits polymères étant fonctionnalisés en bout de chaîne.

Un autre but est de proposer un procédé de polymérisation radicalaire contrôlée pour la synthèse de polymères et de copolymères à blocs présentant un indice de polydispersité faible.

Un autre but est de proposer un procédé de polymérisation radicalaire contrôlée pour la synthèse d'oligomères présentant un taux de fonctions constant de chaîne à chaîne.

Dans ce but l'invention concerne un procédé de polymérisation de polymères à blocs de formule générale (I) : 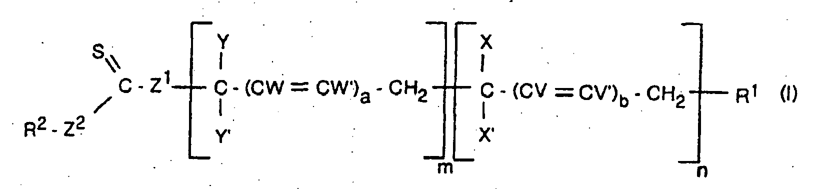 dans lequel on met en contact :
- un monomère éthyléniquement insaturé de formule : CYY' (= CW - CW')ₐ = CH₂,
- un composé précurseur de formule générale (II) : 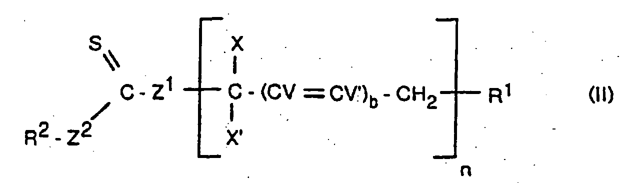
- un initiateur de polymérisation radicalaire.

L'invention concerne également les polymères à blocs susceptible d'être obtenus par le procédé ci-dessus.

Enfin, l'invention concerne des polymères de formule générale (II) dont l'indice de polydispersité est d'au plus 2.

D'autres détails et avantages de l'invention apparaîtront plus clairement à la lecture de la description et des exemples.

L'invention concerne donc tout d'abord un procédé de polymérisation de polymères à blocs de formule générale (I): 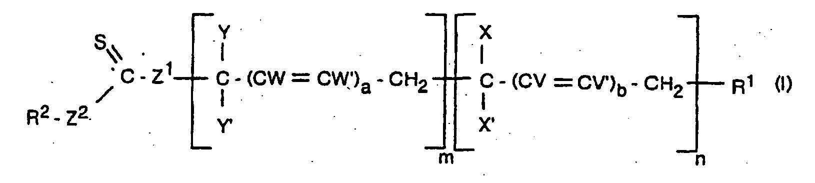 dans laquelle :
- Z¹ = S,
- Z² = O ou S,
- R¹ et R², identiques ou différents, représentent :
   . un groupe (i) alkyle, acyle, aryle, alcéne ou alcyne éventuellement substitué, ou
   . un cycle (ii) carboné, saturé ou non, éventuellement substitué ou aromatique, ou
   . un hétérocycle (iii), saturé ou non, éventuellement substitué,
      ces groupes et cycles (i), (ii) et (iii) pouvant être substitués par des groupes phényles substitués, des groupes aromatiques substitués ou des groupes : alkoxycarbonyle ou aryloxycarbonyle (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, allyle, époxy, alkoxy (-OR), S-alkyle, S-aryle, les groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires),
      R représentant un groupe alkyle ou aryle,
   . une chaîne polymère,
- V, V', W et W', identiques ou différents, représentent : H, un groupe alkyle ou un halogène,
- X, X', Y et Y', identiques ou différents, représentent H, un halogène ou un groupe R³, OR³, OCOR³, NHCOH, OH, NH₂, NHR³, N(R³)₂, (R³)₂N⁺O⁻, NHCOR³, CO₂H, CO₂R³, CN, CONH₂, CONHR³ ou CONR³₂, dans lesquels R³ est choisi parmi les groupes alkyle, aryle, aralkyle, alkaryle, alcène ou organosilyle, éventuellement perfluorés et éventuellement substitués par un ou plusieurs groupes carboxyle, époxy, hydroxyle, alkoxy, amino, halogène ou sulfonique,
- a et b, identiques ou différents, valent 0 ou 1,
- m et n, identiques ou différents, sont supérieurs ou égaux à 1, et lorsque l'un ou l'autre est supérieur à 1, les motifs unitaires répétitifs sont identiques ou différents, procédé dans lequel on met en contact :
   - un monomère éthyléniquement insaturé de formule : CYY' (= CW - CW')ₐ = CH₂,
   - un composé précurseur de formule générale (II) : 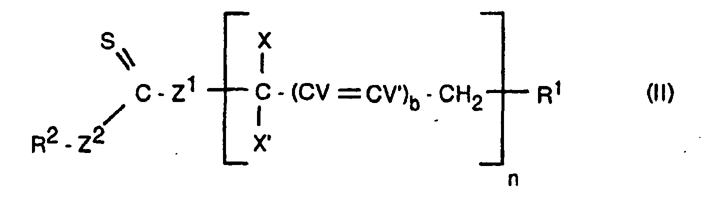
   - un initiateur de polymérisation radicalaire.

Le procédé consiste donc à mettre en contact'un initiateur de polymérisation radicalaire, un monomère éthyléniquement insaturé et un précurseur de formule générale (II).

L'initiateur de polymérisation radicalaire peut être choisi parmi les initiateurs classiquement utilisés en polymérisation radicalaire. Il peut s'agir par exemple d'un des initiateurs suivants :
- les peroxydes d'hydrogène tels que : l'hydroperoxyde de butyle tertiaire, l'hydroperoxyde de cumène, le t-butyl-peroxyacétate, le t-butylperoxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,
- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis(2-méthyl-N-(2-hydroxyéthyl) propionamide], le 2,2'-azobis(isobutyramide) dihydrate,
- les systèmes redox comportant des combinaisons telles que :
   . les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
   . les persulfates, perborate ou perchlorate de métaux alcalins ou d'ammonium en association avec un bisulfite de métal alcalin, tel que le métabisulfite de sodium, et des sucres réducteurs,
   . les persulfate de métal alcalin en association avec un acide arylphosphinique, tel que l'acide benzène phosphonique et autres similaires, et des sucres réducteurs.

La quantité d'initiateur à utiliser est déterminée de manière à ce que la quantité de radicaux générés soit d'au plus 20 % en mole par rapport à la quantité de composé (II), de préférence d'au plus 5 % en mole.

Comme monomère éthyléniquement insaturé, on utilise plus spécifiquement selon l'invention les monomères choisis parmi le styrène ou ses dérivés, le butadiène, le chloroprène, les esters (méth)acryliques, les esters vinyliques et les nitriles vinyliques.

Le butadiène et le chloroprène correspondent au cas où a et b = 1 dans les formules (I), (II) et dans la formule du monomère précédemment donnée.

Par esters (méth)acryliques, on désigne les esters de l'acide acrylique et de l'acide méthacrylique avec les alcools en C₁-C₁₂ hydrogénés ou fluorés, de préférence C₁-C₈. Parmi les composés de ce type, on peut citer : l'acrylate de méthyle, l'acrylate d'éthyle, l'acrylate de propyle, l'acrylate de n-butyle, l'acrylate d'isobutyle, l'acrylate de 2-éthylhexyle, l'acrylate de t-butyle, le méthacrylate de méthyle, le méthacrylate d'éthyle, le méthacrylate de n-butyle, le méthacrylate d'isobutyle.

Les nitriles vinyliques incluent plus particulièrement ceux ayant de 3 à 12 atomes de carbone, comme en particulier l'acrylonitrile et le méthacrylonitrile.

Il est à noter que le styrène peut être remplacé en totalité ou en partie par des dérivés tels que l'alphaméthylstyrène ou le vinyltoluène.

Les autres monomères éthylèniquement insaturés, utilisables seuls ou en mélanges, ou copolymérisables avec les monomères ci-dessus sont notamment :
- les esters vinyliques d'acide carboxylique comme l'acétate de vinyle, le versatate de vinyle, le propionate de vinyle,
- les halogénures de vinyle,
- les acides mono- et di- carboxyliques insaturés éthyléniques comme l'acide acrylique, l'acide méthacrylique, l'acide itaconique, l'acide maléique, l'acide fumarique et les mono-alkylesters des acides dicarboxyliques du type cité avec les alcanols ayant de préférence 1 à 4 atomes de carbone et leurs dérivés N-substitués,
- les amides des acides carboxyliques insaturés comme l'acrylamide, le méthacrylamide, le N-méthylolacrylamide ou méthacrylamide, les N-alkylacrylamides.
- les monomères éthyléniques comportant un groupe acide sulfonique et ses sels alcalins ou d'ammonium par exemple l'acide vinylsulfonique, l'acide vinyl-benzène sulfonique, l'acide alpha-acrylamido méthylpropane-sulfonique, le 2-sulfoéthylène-méthacrylate,
- les amides de la vinylamine, notamment le vinylformamide ou le vinylacétamide,
- les monomères éthyléniques insaturés comportant un groupe amino secondaire, tertiaire ou quaternaire, ou un groupe hétérocyclique contenant de l'azote tel que par exemple les vinylpyridines, le vinylimidazole, les (méth)acrylates d'aminoalkyle et les (méth)acrylamides d'aminoalkyle comme le diméthylaminoéthyl-acrylate ou - méthacrylate, le ditertiobutylaminoéthyl-acrylate ou -méthacrylate, le diméthylamino méthyl-acrylamide ou -méthacrylamide. Il est de même possible d'utiliser des monomères zwitterioniques comme par exemple l'acrylate de sulfopropyl (diméthyl)aminopropyle.

Pour la préparation des copolymères de formule (I) pour lesquels Y = H et Y' = NH₂, on utilise de préférence à titre de monomères éthyléniquement insaturés les amides de la vinylamine, par exemple le vinylformamide ou le vinylacétamide. Puis le copolymère obtenu est hydrolysé à pH acide ou basique.

Pour la préparation des copolymères de formule (I) pour lesquels Y = H et Y' = OH, on utilise de préférence à titre de monomères éthyléniquement insaturés les esters vinyliques d'acide carboxylique, comme par exemple l'acétate de vinyle. Puis le copolymère obtenu est hydrolysé à pH acide ou basique.

Les types et quantités de monomères copolymérisables mis en oeuvre selon la présente invention varient en fonction de l'application finale particulière à laquelle est destiné le polymère à blocs. Ces variations sont bien connues et peuvent être facilement déterminées par l'homme du métier.

Pour que le polymère de formule générale (I) soit un polymère à blocs, le composé "précurseur" de formule générale (II) doit être un polymère.

Donc n est supérieur ou égal à 1, de préférence supérieur ou égal à 6. Les unités monomères de ce polymère peuvent être identiques ou différentes.

Selon la variante préférée de l'invention, dans la formule (II) des composés précurseurs, Z¹ est un atome de soufre et Z² est un atome d'oxygène : ces composés sont donc fonctionnalisés en bout de chaîne par des xanthates d'alkyles.

De préférence, dans la formule (II) des composés précurseurs, R¹ représente :
- un groupe de formule CR'¹R'²R'³, dans laquelle :
   . R'¹, R'² et R'³ représentent des groupes (i), (ii) ou (iii) tels que définis ci-dessus, ou
   . R'¹ = R'² = H et R'³ est un groupe aryle, alcène ou alcyne,
- ou un groupe -COR'⁴ dans lequel R'⁴ représente un groupe (i), (ii) ou (iii) tel que définis ci-dessus.

De même, dans la formule (II) des composés précurseurs, R² représente de préférence un groupe de formule : -CH₂R'⁵, dans laquelle R'⁵ représente H ou un groupe (i), (ii) ou (iii) à l'exception des groupes aryle, alcyne et alcène.

Les résultats les plus intéressants ont été obtenus pour les composés de formule (II) lorsque Z¹ est un atome de soufre, Z² est un atome d'oxygène, R² est le groupe éthyl ou phényl, et R¹ est un groupe choisi parmi :

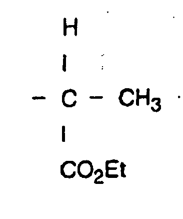

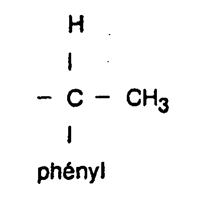

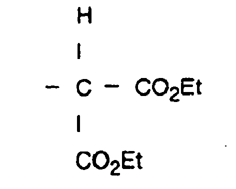

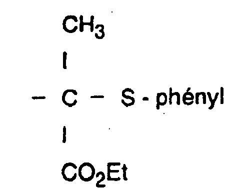

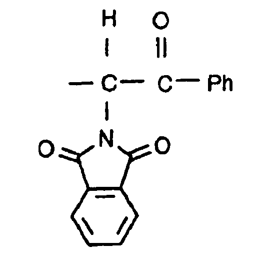

Le groupe R1 peut également représenter une chaîne polymère issue d'une polymérisation radicalaire ou ionique, ou être issue d'une polycondensation.

Les composés (II) particulièrement préférés sont les homopolymères de styrène (Y'= H, Y = C₆H₅, b = 0), d'acrylate de méthyle (Y'= H, Y = COOMe, b = 0), d'acrylate d'éthyle (Y'= H, Y = COOEt, b = 0), d'acrylate de butyle (Y'= H, Y = COOBu, b = 0), d'acrylate de tertiobutyle (Y'= H, Y = COOtBu, b = 0), d'acétate de vinyle (Y'= H, Y = OCOMe, b = 0), d'acide acrylique (Y'= H, Y = COOH, b = 0), et pour lesquels :
- Z¹ = S, Z² = O, R1 = CHCH₃(CO₂Et) et R² = Et, ou
- Z¹ = S, Z² = O, R¹ = CH(CO₂Et)₂ et R² = Et.

Ce polymère précurseur (II) peut être issu de la polymérisation radicalaire d'un monomère éthyléniquement insaturé de formule : CXX' (= CV - CV')_{b} = CH₂ par mise en contact dudit monomère avec un initiateur de polymérisation radicalaire et un composé de formule générale (III), (IV) ou (V) : 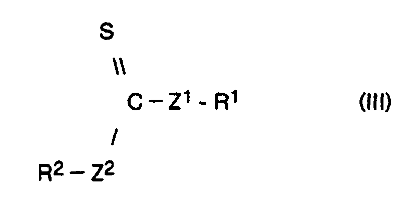 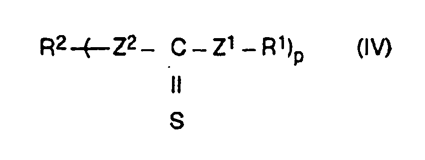 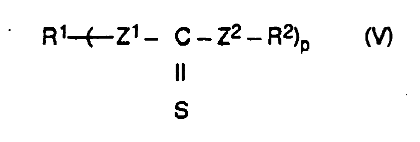 p étant compris entre 2 et 10, de préférence entre 2 et 5.

Lors de cette synthèse, les initiateurs de polymérisation radicalaire et les monomères éthyléniquement insaturés sont du type de ceux précédemment cités.

Quant aux composés de formules générales (III), (IV) ou (V), les symboles R², Z², R¹ et Z¹ ont la même signification que précédemment. Les préférences quant à ses symboles sont les mêmes que précédemment.

Ainsi, les composés de formule générale (III) préférés sont le a-(O-éthylxanthyl)propionate d'éthyle (Z¹ = S, Z² = O, R¹ = CHCH₃(CO₂Et), R² = Et) et le [1-(O-éthylxanthyl)malonate (Z¹ = S, Z² = O, R¹ = CH(CO₂Et)₂, R² = Et).

Parmi les composés de formule (IV), on préfère ceux pour lesquels R² est le groupe - (CH₂)q - ou un groupe polyéther - (CHR - CH₂ - O)_{q} - CHR - CH₂ -, avec q compris entre 2 et 10.

Parmi les composés de formule (V), on préfère ceux pour lesquels R¹ est le groupe - CH₂- phényl - CH₂ - ou le groupe - CHCH₃CO₂CH₂CH₂CO₂CHCH₃ -.

Les composés de formules (III), (IV) et (V) sont facilement accessibles. Ceux pour lesquels Z¹ est un atome de soufre et Z² est un atome d'oxygène, dits xanthates d'alkyle, peuvent notamment être obtenus par réaction entre un sel de xanthate, tel qu'un sel alcalin du type : 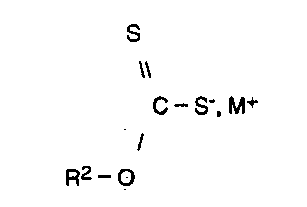 et un dérivé halogéné du type : Hal - R¹ avec Hal choisi parmi Cl, Br ou I.

Les composés de formules (III), (IV) et (V) dans lesquelles Z¹ égale S peuvent également être obtenus par le procédé dans lequel on mélange et on chauffe :
- un composé disulfuré (S) de formule (A) 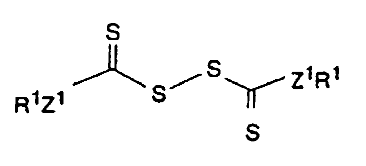
- et un composé diazoïque (N) de formule (B) :

   R²Z²― N = N ― Z²R²

Le procédé complet de synthèse d'un polymère à blocs de formule (I) selon l'invention peut donc consister à :
(1) synthétiser un polymère par mise en contact d'un monomère éthyiéniquement insaturé de formule : CXX' (= CV - CV')_{b} = CH₂, d'un initiateur de polymérisation radicalaire et d'un composé de formule (III), (IV) ou (V),
(2) utiliser le polymère obtenu à l'étape 1 en tant que précurseur de formule générale (II) pour préparer un polymère dibloc par mise en contact avec un nouveau monomère éthyléniquement insaturé de formule : CYY' (= CW - CW')ₐ = CH₂ et un initiateur de polymérisation radicalaire,

Cette étape (2) peut être répétée autant de fois que voulu avec de nouveaux monomères pour synthétiser de nouveaux blocs et obtenir un polymère multibloc.

Comme indiqué précédemment, pour la préparation des précurseurs de formule (II) pour lesquels X = H et X' = NH₂ (étape (1) ci-dessus définie), on utilise de préférence à titre de monomères éthyléniquement insaturés les amides de la vinylamine, par exemple le vinylformamide ou le vinylacétamide. Puis, le polymère obtenu est hydrolysé à pH acide ou basique.

De même, pour la préparation des précurseurs de formule (II) pour lesquels X = H et X' = OH, on utilise de préférence à titre de monomères éthyléniquement insaturés les esters vinyliques d'acide carboxylique, comme par exemple l'acétate de vinyle. Puis le polymère obtenu est hydrolysé à pH acide ou basique.

Sans pour autant exclure tout autre schéma réactionnel, le mécanisme d'action supposé de la polymérisation est illustré ci-dessous dans le cas d'un composé présurseur de formula (II) de type xanthate.

### 1. Initiation de la polymérisation :

I₂ → 2 I°

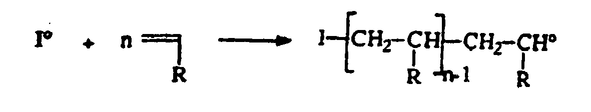

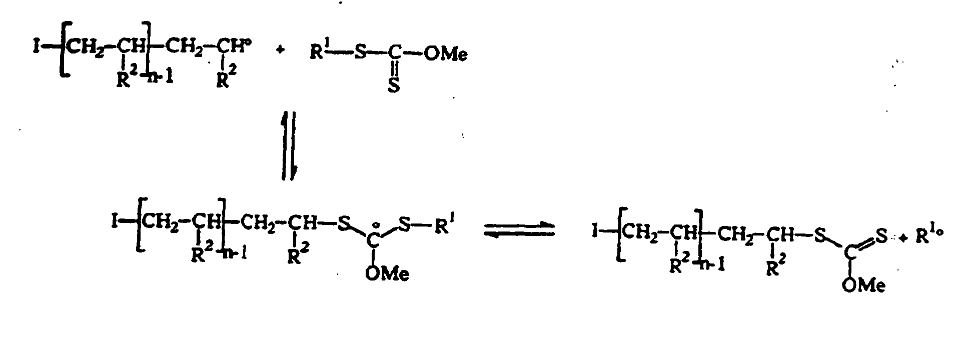

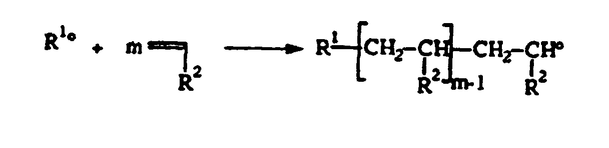

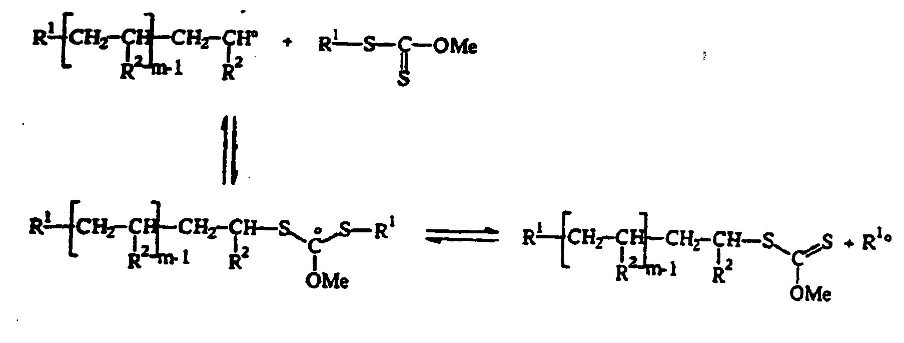

### 2. Croissance des chaines

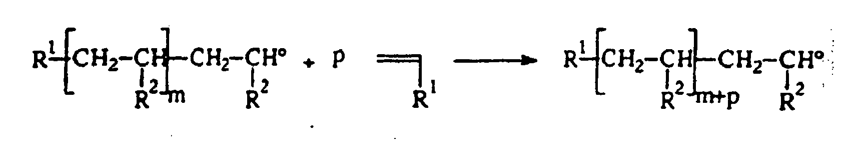

### 3. Transfert de chaîne dégénératif

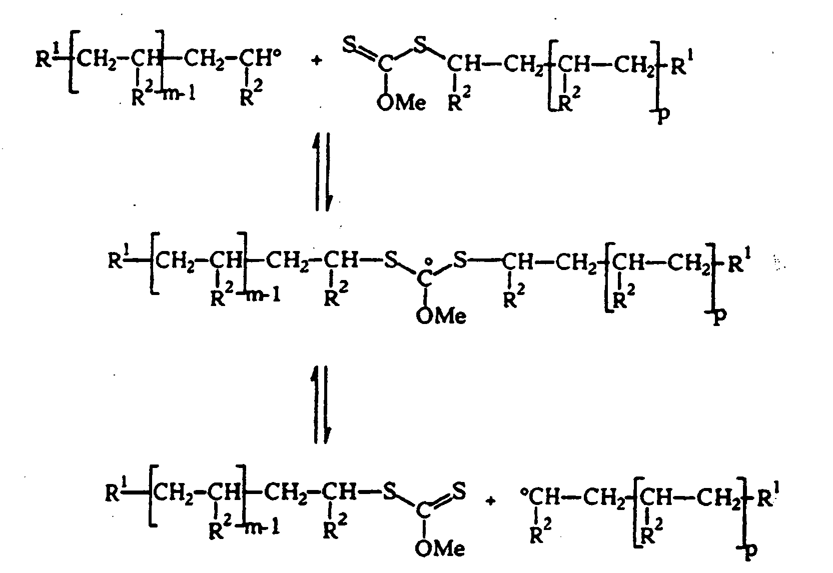

La réaction de transfert de chaîne dégénératif permet de réactiver en macroradical une chaîne " dormante ", qui porte le motif xanthate à son extrémité. Ce dernier peut croître par propagation et de nouveau s'additionner sur une extrémité de chaîne xanthate et fragmenter. Lorsque la vitesse d'échange du xanthate est au moins aussi grande que la vitesse de propagation, alors les chaînes vont croître selon un processus contrôlé. Lorsque le monomère CH₂ = CHR² est entièrement consommé, un deuxième monomère de nature différente CH₂ = CHR³ est introduit dans le milieu, on obtient alors des copolymères à blocs de formule générale (I) :

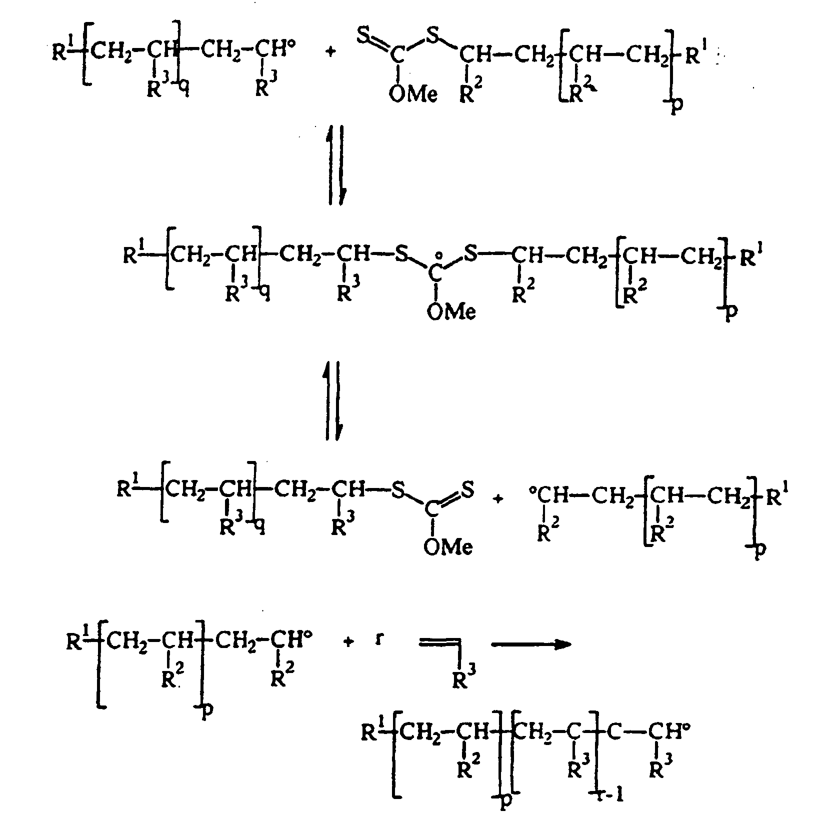

Selon ce principe, l'invention concerne donc également un procédé de préparation de polymères multiblocs, dans lequel on répète au moins une fois la mise en oeuvre du procédé précédemment décrit en utilisant :
- des monomères différents de la mise en oeuvre précédente, et
- à la place du composé précurseur de formule (II) le polymère à blocs issu de la mise en oeuvre précédente.

Si on répète la mise en oeuvre une fois, on obtiendra un polymère tribloc, si on le répète une deuxième fois, on obtiendra un polymère "quadribloc", et ainsi de suite. De cette manière, à chaque nouvelle mise en oeuvre, le produit obtenu est un polymère à blocs présentant un bloc polymère supplémentaire.

Donc, pour la préparation de polymères multiblocs, le procédé consiste à répéter plusieurs fois la mise en oeuvre du procédé précédent sur le polymère à blocs issu de chaque mise en oeuvre précédente avec des monomères différents.

Selon ce procédé de préparation de polymères multiblocs, lorsque l'on souhaite obtenir des polymères à blocs homogènes et non à gradient de composition, et si toutes les polymérisations successives sont réalisées dans le même réacteur, il est essentiel que tous les monomères utilisés lors d'une étape aient été consommés avant que la polymérisation de l'étape suivante ne commence, donc avant que les nouveaux monomères ne soient introduits.

Les composés de formule (IV) et (V) sont particulièrement intéressants car ils permettent de faire croître une chaîne polymère sur au moins deux sites actifs. Avec ce type de composé, il est possible d'économiser des étapes de polymérisation pour obtenir un copolymère à n blocs.

Ainsi, si p vaut 2 dans la formule (IV) ou (V), le premier bloc est obtenu par polymérisation d'un monomère M1 en présence du composé de formule (IV) ou (V). Ce premier bloc peut ensuite croître à chacune de ses extrémités par polymérisation d'un deuxième monomère M2. Un copolymère tribloc est obtenu, ce polymère tribloc peut, lui-même, croître à chacune de ses extrémités par polymérisation d'un troisième monomère M3. Ainsi, un copolymère "pentabloc" est obtenu en seulement trois étapes.

Si p est supérieur à 2, le procédé permet d'obtenir des homopolymères ou des copolymères à blocs dont la structure est "multi-bras" ou hyperbranchée.

La polymérisation peut être réalisée en masse, en solution ou en émulsion. De préférence, elle est mise en oeuvre en émulsion.

De préférence, le procédé est mis en oeuvre de manière semi-continue.

La température peut varier entre la température ambiante et 150°C selon la nature des monomères utilisés.

En général, au cours de la polymérisation, la teneur instantanée en polymère par rapport à la quantité instantanée en monomère et polymère est comprise entre 50 et 99 % en poids, de préférence entre 75 et 99 %, encore plus préférentiellement entre 90 et 99 %. Par polymère, on entend soit le composé de formule (I) pour la synthèse de copolymère à blocs, soit le composé de formule (II) pour la synthèse du polymère précurseur. Cette teneur est maintenue, de manière connue, par contrôle de la température, de la vitesse d'addition des réactifs et de l'initiateur de polymérisation.

Le procédé est mis en oeuvre en l'absence de source UV.

Le procédé selon l'invention présente l'avantage de conduire à des polymères à blocs présentant un indice de polydispersité faible.

Il permet également de contrôler la masse moléculaire des polymères.

L'invention concerne donc aussi les polymères à blocs susceptibles d'être obtenus par le procédé précédent.

Ces polymères présentent, en général, un indice de polydispersité d'au plus 2, de préférence d'au plus 1,5.

Ces résultats sont notamment obtenus pour les polymères à blocs de formule (I) fonctionnalisés en bout de chaîne par le groupe xanthate d'alkyle.

Ces polymères correspondent au polymères de formule générale (I) pour lesquels Z¹ est un atome de soufre et Z² est un atome d'oxygène.

Les polymères à blocs préférés sont ceux présentant au moins deux blocs polymères choisis parmi les associations suivantes :
- polystyrène/polyacrylate de méthyle
- polystyrène/polyacrylate d'éthyle,
- polystyrène/polyacrylate de tertiobutyle,
- polyacrylate d'éthyle/polyacétate de vinyle,
- polyacrylate de butyle/polyacétate de vinyle
- polyacrylate d'éthyle/polyacrylate de tertiobutyle,
- polyacrylate de tertiobutyle/polyacétate de vinyle,
- polyacrylate d'éthyle/polyacrylate de butyle,
- polyacrylate de butyle/alcool polyvinylique,
- polyacide acrylique/alcool polyvinylique.

Selon un mode préféré, les polymères présentent au moins deux blocs polymères choisis parmi les associations précédentes et sont de formule générale (I), dans laquelle
- Z¹ = S, Z² = O, R¹ = CHCH₃(CO₂Et) et R² = Et, ou
- Z¹ = S, Z² = O, R¹ = CH(CO₂Et)₂ et R² = Et.

Enfin, le procédé de synthèse des polymères précurseurs de formule générale (II) permet également de synthétiser des polymères présentant un faible indice de polydispersité. Ces polymères précurseurs présentent, en général, un indice de polydispersité d'au plus 2, de préférence d'au plus 1,5, notamment lorsque ces polymères sont fonctionnalisés xanthate d'alkyle (Z¹ est un atome de soufre et Z² est un atome d'oxygène).

De préférence, n est supérieur ou égal à 6.

Les composés (II) particulièrement préférés sont les homopolymères de styrène (Y'= H, Y = C₆H₅, b = 0), d'acrylate de méthyle (Y'= H, Y = COOMe, b = 0), d'acrylate d'éthyle (Y'= H, Y = COOEt, b = 0),d'acrylate de butyle (Y'= H, Y = COOBu, b = 0), d'acrylate de tertiobutyle (Y'= H, Y = COOtBu, b = 0), d'acétate de vinyle (Y'= H, Y = OCOMe, b = 0), d'acide acrylique (Y'= H, Y = COOH, b = 0), et pour lesquels :
- Z¹ = S, Z² = O, R¹ = CHCH₃(CO₂Et) et R² = Et, ou
- Z¹ = S, Z² = O, R¹ = CH(CO₂Et)₂ et R² = Et.

Les exemples suivants illustrent l'invention sans toutefois en limiter la portée.

### EXEMPLES

### 1. SYNTHESE DE PRECURSEURS DE FORMULE (III) (xanthate d'alkyle)

### Exemple 1.1 : Synthèse du précurseur a-(O-éthylxanthyl)propionate d'éthyle

Dans un ballon, on introduit environ 1 litre d'éthanol et 80 ml de a-bromopropionate d'éthyle. Le ballon est plongé dans un bain de glace. L'homogénéisation se fait sous agitation et balayage d'azote. Lorsque la température du milieu réactionnel est stabilisée, on ajoute 109 g d'O-éthylxanthate de potassium. L'agitation et le balayage d'azote sont maintenus pendant environ 4 heures au cours desquelles le milieu devient blanchâtre en raison de la formation de KBr.

Lorsque la réaction est terminée, environ 1 litre d'eau est additionné dans le réacteur. Le milieu devient limpide et jaune. Le produit désiré est extrait de la phase eau-alcool par un mélange éther/pentane (1/2) et récupéré par évaporation sous vide.

Le spectre par RMN ¹³C donne les pics suivants : 171,21 ; 70,11 ; 61,62 ; 47,01 ; 16,82; 14,04; 13,60.

### Exemple 1.2 : Synthèse du précurseur [1-(O-éthylxanthyl)éthyl]benzène

Dans un ballon, on introduit environ 1 litre d'éthanol et 80 ml de (1-bromoéthyl)benzène. Le ballon est plongé dans un bain de glace. L'homogénéisation se fait sous agitation et balayage d'azote. Lorsque la température du milieu réactionnel est stabilisée, on ajoute 104 g d'O-éthylxanthate de potassium. L'agitation et le balayage d'azote sont maintenus pendant environ 4 heures au cours desquelles le milieu devient blanchâtre e nraison de la formation de KBr.

Lorsque la réaction est terminée, environ 1 litre d'eau est additionné dans le réacteur. Le milieu devient limpide et jaune. Le produit désiré est extrait de la phase eau-alcool par un mélange éther/pentane (1/2) et récupéré par évaporation sous vide.

Le spectre par RMN ¹³C donne les pics suivants : 213,25 ; 141,73 ; 128,57 ; 127,47 ; 126,49; 69,69 ; 49,21 ; 21,70 ; 13,71.

### Exemple 1.3 : Synthèse du précurseur a, a'-di(O-éthylxanthyl)-p-xylène

Dans un ballon, on introduit environ 1 litre d'éthanol et 80 ml de a, a'-dichloro-p-xylène. Le ballon est plongé dans un bain de glace. L'homogénéisation se fait sous agitation et balayage d'azote. Lorsque la température du milieu réactionnel est stabilisée, on ajoute 184 g d'O-éthylxanthate de potassium. L'agitation et le balayage d'azote sont maintenus pendant environ 4 heures au cours desquelles le milieu devient blanchâtre e nraison de la formation de KCI.

Lorsque la réaction est terminée, environ 1 litre d'eau est additionné dans le réacteur. Le milieu devient limpide et jaune. Le produit désiré est extrait de la phase eau-alcool par un mélange dichlorométhane/éther/pentane (1/1/2) et récupéré par évaporation sous vide.

Le spectre par RMN ¹³C donne les pics suivants : 135,27 ; 129,42 ; 70,23 ; 40,12 ; 13,89.

### Exemple 1.4 : Synthèse du précurseur a-(O-éthylxanthyl)-a-phtalimido acétophenone

Dans un ballon, on introduit 74 ml d'acétone et 12,7 g de a-bromo-a-phtalimido acétophénone. Le mélange est homogénéisé sous agitation et balayage d'azote. On ajoute 6,5 g de sel O-éthylxanthate de potassium. La réaction dure 5 min, puis le milieu réactionnel est dilué par de l'eau distillée.

Le solide précipité est filtré, séché et purifié par recristallisation dans l'éthanol.

Le spectre par RMN ¹³C donne les pics suivants : 210,0 ; 189,2 ; 166,2 ; 134,4 ; 133,8 ; 133,6 ; 131,5 ; 128,7 ; 128,4 ; 123,7 ; 71,6 ; 61,8 ; 13,6.

### Exemple 1.5 : Synthèse du précurseur a-(O-éthylxanthyl)-a-phénylthiopropionate d'éthyle

Dans un ballon, on introduit 11 ml d'acétone et 2,36 g de sel O-éthylxanthate de potassium. Le mélange est homogénéisé sous agitation et balayage d'azote puis, on ajoute au goutte à goutte une solution de a-chloro-a-phénylthiopropionate d'éthyle (1,56 g) dans l'acétone (4 ml). Le mélange est agité pendant 30 min. Le solvant est évaporé. Le résidu dilué à l'éther, puis lavé à l'eau.

La phase organique est séparée et séchée sur du sulfate de sodium. Le produit est récupéré après concentration sous vide et purification par chromatographie sur silice.

Le spectre par RMN ¹³C donne les pics suivants : 211,3 ; 168,8 ; 137,6 ; 130,4 ; 129,0 ; 128,9 ; 69,72 ; 62,99 ; 62,13 ; 25,56 ; 13,80 ; 13,37.

### Exemple 1.6 Synthèse du précurseur O-éthylxanthylmalonate

Dans un ballon, on introduit 50 ml d'acétone et 4 ml de diéthylchloromalonate. Le mélange est homogénéisé sous agitation et balayage d'azote et on ajoute 4,4 g de sel O-éthylxanthate de potassium. La réaction dure 1 heure à l'issue de laquelle le milieu réactionnel est dilué par 20 ml d'eau.

Le produit est extrait de la phase ainsi obtenue par 50 ml d'éther puis purifié par chromatographie flash.

Le spectre par RMN ¹³C donne les pics suivants : 210,3 ; 165,2 ; 71,0 ; 62,8 ; 56,4 ; 14,0 ; 13,6.

### Exemple 1.7: Synthèse du précurseur a-(O-phénylethylxanthyl)-a-phénylthiopropionate d'éthyle

On introduit dans un ballon 20 ml d'acétone et 5,58 g d'O-phényléthylxanthate de potassium. Le mélange est homogénéisé sous agitation et balayage d'azote, puis la température est abaissée à 0°C.

Une solution de a-chloro-a-phénylthiopropionate d'éthyle (6.15 g) dans l'acétone (20 ml) est ajoutée goutte à goutte dans le ballon. Le mélange est agité pendant 2 heures.

Le solvant est ensuite évaporé. Le résidu est dilué à l'éther, lavé une première fois à l'eau, puis par une solution aqueuse saturée en NaCI. La phase organique est séparée et séchée sur du sulfate de sodium.

Le produit est récupéré sous forme de cristaux blancs après évaporation et recristallisation dans l'éther à température ambiante.

Le spectre par RMN ¹³C donne les pics suivants : 211,27 ; 168,82 ; 130,42 ; 69,72 ; 62,13 ; 25,56 ; 13,80 ; 13,37.

### Exemple 1.8: Synthèse du précurseur a-(O-phénylethy(xanthyl)-a-phényléthanoate d'éthyle

On introduit dans un ballon 1 équivalent d'alcool phényléthylique (16,78 ml) en solution dans 150 ml de THF, puis on ajoute 1 équivalent de NaH (5,68 g) à 0°C.

Après deux heures d'agitation, 1 équivalent de CS₂ (8,48 ml) est ajouté.

Après agitation toute la nuit à température ambiante, la solution est filtrée. Le sel est lavé avec du pentane puis séché. Il est isolé d'une manière quantitative sous la forme d'une poudre jaune dont 1,09 g est dissous dans 5 ml d'acétone. La solution est refroidie à 0°C.

1 équivalent (0,99 g) de a-chlorophénylethanoate d'éthyle est ajouté. La solution est agitée pendant trois heures à température ambiante.

Elle est ensuite extraite par de l'éther, séchée sur sulfate de magnésium et concentrée sous vide.

1,62 g de a-(O-phénylethylxanthyl)-a-phényléthanoate d'éthyle est récupéré. Le rendement global de réaction est de 90 %.

### Exemple 1.9 : Synthèse du précurseur (O-ethylxanthyl)-isobutyronitrile

On dissout 10 ml de bis(O-ethyl)xanthate (2,42 g) dans 36 ml d'hexane dans un ballon de 100 ml muni d'un réfrigérant et sous atmosphère inerte d'argon.

La solution est chauffée pendant 15 min puis 1 équivalent d'azo-bis-isobutyronitrile (AIBN) (1,64 g) est additionné. 0,5 équivalent d'AIBN (0,82 g) est ajouté après deux heures et demie.

La solution est séchée sous vide. Le produit est purifié par chromatographie et isolé. Le rendement est de 77 %.

### Exemple 1.10 : Synthèse du précurseur O-néopentylxanthylmalonate d'éthyle

Dans un ballon, on introduit 1 équivalent d'alcool néopentylique (2,15 ml) en solution dans 30 ml de THF. Puis, on ajoute 1 équivalent de NaH (0,81 g) à 0°C.

Après deux heures d'agitation, on ajoute 1 équivalent de CS₂ (1.21 ml).

Après agitation toute la nuit à température ambiante, la solution est filtrée. Le sel est lavé avec du pentane, puis séché. Il est isolé d'une manière quantitative sous la forme d'une poudre jaune dont 1,86 g est mis en solution dans 10 ml d'acétone. La solution est refroidie à 0°C.

On ajoute 1 équivalent d'éthylchloromalonate (1,61 ml) dans 5 ml d'acétone. La solution est agitée pendant 4 heures à température ambiante. Elle est ensuite hydrolysée et extraite à l'éther. Puis, elle est séchée sur du sulfate de magnésium et concentrée sous vide.

Après purification par chromatographie, on isole 2,08 g de produit. Le rendement est de 65 %.

### Exemple 1.11 : Synthèse du précurseur O-isobornylxanthytmalonate d'éthyle

Dans un ballon, on introduit 15,4 g d'isobornéol en solution dans 200 ml de THF. La solution est traitée par 1 équivalent de NaH à 0°C puis, après deux heures d'agitation, on ajoute 6 ml de CS₂.

La solution est agitée toute la nuit à température ambiante puis filtrée. Les sels sont ensuite lavés par de l'éther. Le filtrat est concentré. Il est repris par du pentane et filtré. Il est enfin séché pour obtenir quantitativement le sel de sodium.

5,04 g de ce sel sont dissous dans 40 ml d'acétone. La solution est refroidie à 0°C. On y ajoute 3,08 ml d'éthylchloromalonate. La solution est agitée pendant une heure à 0°C. Elle est ensuite hydrolysée, extraite à l'éther, puis séchée sur du sulfate de magnésium et concentrée sous vide.

Après purification par chromatographie sur silice, on obtient 5,92 g de produit. Le rendement est de 80 %.

### Exemple 1.12 : Synthèse du précurseur (O-isopropylxanthyl)-valeronitrile

On dissout 0,336 g d'azo-bis-valéronitrile et 0,27 g de bis(O-isopropyl)xanthate dans du dioxane. La température est portée à 101°C.

Après 12 heures d'agitation, le solvant est évaporé et le résidu purifié par chromatographie sur silice.

Le produit est obtenu avec un rendement de 60 %.

### EXEMPLES 2 - SYNTHESE DES PRECURSEURS DE FORMULE (II) (homopolymères)

### Exemple 2.1 : Homopolymère de styrène

Dans un ballon de 10 ml, on introduit 1 mmol de a-(O-éthylxanthyl)propionete d'éthyle (0,222 g) et 40 mmol de styrène (4,16 g). La température est portée à 125°C et on ajoute 0,03 mmol de peroxyde de lauroyle (12,8 mg).

La polymérisation dure 9 heures au cours desquelles on réalise plusieurs ajouts d'amorceur :
- 0,02 mmol après deux heures,
- 0,02 mmol après quatre heures,
- 0,01 mmol après six heures,
- 0,01 mmol après huit heures.

Le polymère est récupéré par précipitation dans le méthanol et analysé par G.P.C. en milieu THF et en équivalents polystyrène (voir tableau 9).

### Exemple 2.2: Homopolymère de styrène

Dans un ballon de 10 ml, on introduit 1 mmol de [1-(O-éthylxanthyl)éthyl]benzène (0,226 g) et 40 mmol de styrène (4,16 g). La température est portée à 90°C et on ajoute 0,02 mmol de peroxyde de lauroyle (8,52 mg).

La polymérisation dure 12 heures au cours desquelles on réalise plusieurs ajouts d'amorceur :
- 0,01 mmol après deux heures,
- 0,01 mmol après quatre heures,
- 0,01 mmol après six heures,
- 0,01 mmol après huit heures,
- 0,01 mmol après dix heures.

Le polymère est récupéré par précipitation dans le méthanol et analysé par G.P.C. en milieu THF et en équivalents polystyrène (voir tableau 9).

### Exemple 2.3 : Homopolymère de styrène

Dans un ballon de 10 ml, on introduit 1 mmol de a, a'-di(O-éthylxanthyl)-p-xylène (0,346 g) et 40 mmol de styrène (4,16 g). La température est portée à 90°C et on ajoute 0,02 mmol de peroxyde de lauroyle (8,52 mg) .

La polymérisation dure 15 heures au cours desquelles plusieurs ajouts d'amorceur sont réalisés :
- 0,01 mmol après deux heures,
- 0,01 mmol après quatre heures,
- 0,01 mmol après six heures,
- 0,01 mmol après huit heures,
- 0,01 mmol après douze heures,
- 0,01 mmol après quatorze heures.

Le polymère est récupéré par précipitation dans le méthanol et analysé par G.P.C. en milieu THF et en équivalents polystyrène (voir tableau 9).

### Exemple 2.4: Homopolymère de styrène

Dans un ballon de 10 ml, on introduit 1 mmol de a-(O-éthylxanthyl)-a-phtalimido acétophenone (0,385 g) et 40 mmol de styrène (4,16 g). La température est portée à 90°C et on ajoute 0,02 mmol de peroxyde de lauroyle (8,52 mg).

La polymérisation dure 15 heures au cours desquelles on réalise plusieurs ajouts d'amorceur :
- 0,01 mmol après deux heures,
- 0,01 mmol après quatre heures,
- 0,01 mmol après six heures,
- 0,01 mmol après huit heures,
- 0,01 mmol après douze heures,
- 0,01 mmol après quatorze heures.

Le polymère est récupéré par précipitation dans le méthanol et analysé par G.P.C. en milieu THF et en équivalents polystyrène (voir tableau 9).

### Exemple 2.5 : Homopolymère de styrène

Dans un ballon de 10 ml, on introduit 1 mmol de a-(O-éthylxanthyl)-a-phénylthiopropionate d'éthyle (0,33 g) et 40 mmol de styrène (4,16 g). La température est portée à 90°C et on ajoute 0,02 mmol de peroxyde de lauroyle (8,52 mg).

La polymérisation dure 15 heures au cours desquelles on réalise plusieurs ajouts d'amorceur :
- 0,01 mmol après deux heures,
- 0,01 mmol après quatre heures,
- 0,01 mmol après six heures,
- 0,01 mmol après huit heures,
- 0,01 mmol après douze heures,
- 0,01 mmol après quatorze heures.

Le polymère est récupéré par précipitation dans le méthanol et analysé par G.P.C. en milieu THF et en équivalents polystyrène (voir tableau 9).

### Exemple 2.6 : Homopolymère d'acrylate de méthyle

Dans un ballon de 10 ml, on introduit 1 mmol de a-(O-éthylxanthyl)propionate d'éthyle (0,222 g), 40 mmol d'acrylate de méthyle (AMe) (3,44 g) et 3,5 ml de toluène. La température est portée à 100°C et on ajoute 0,035 mmol de peroxyde de lauroyte (14,9 mg). La polymérisation dure 15 heures au cours desquelles on réalise plusieurs ajouts d'amorceur :
- 0,02 mmol après deux heures,
- 0,02 mmol après six heures,
- 0,02 mmol après dix heures.

Le polymère est récupéré par évaporation, sous vide poussé, du solvant et des traces de monomères résiduels et analysé par G.P.C. en milieu THF et en équivalents polystyrène (voir tableau 9).

### Exemple 2.7 : Homopolymère d'acrylate de méthyle

Dans un ballon de 10 ml, on introduit 1 mmol de a-(O-éthylxanthyl)propionate d'éthyle (0,222 g) et 40 mmol d'acrylate de méthyle (3,44 g). La température est portée à 80°C et on ajoute 0,03 mmol de peroxyde de lauroyle (12,8 mg).

La polymérisation dure 45 min.

Le polymère est récupéré par évaporation, sous vide poussé, du solvant et des traces de monomères résiduels. Il est analysé par G.P.C. en milieu THF et en équivalents polystyrène (voir tableau 9).

### Exemple 2.8 : Homopolymère d'acrylate de méthyle

Dans un ballon de 10 ml, on introduit 1 mmol de a-(O-éthylxanthyl)propionate d'éthyle (0,222 g) et 80 mmol d'acrylate de méthyle (6,88 g). La température est portée à 80°C et 0,02 mmol de peroxyde de lauroyle (8,52 mg) sont ajoutées. La polymérisation dure 45 min.

Le polymère est récupéré par évaporation, sous vide poussé, des traces de monomères résiduels. Il est analysé par G.P.C. en milieu THF et en équivalents polystyrène (voir tableau 9).

### Exemple 2.9 : Homopolymère d'acrylate de méthyle

Dans un ballon de 10 ml, on introduit 1 mmol de a-(O-éthylxanthyl)-a-phtalimido acétophenone (0,385 g) et 40 mmol d'acrylate de méthyle (3,44 g). La température est portée à 80°C et 0,02 mmol de peroxyde de lauroyle (8,52 mg) sont ajoutées. La polymérisation dure 45 min.

Le polymère est récupéré par évaporation sous vide poussé des traces de monomères résiduels. Il est analysé par G.P.C. (voir tableau 9).

### Exemple 2.10 : Homopolymère d'acrylate d'éthyle

Dans un ballon de 10 ml, on introduit 1 mmol de a-(O-éthylxanthyl)propionate d'éthyle (0,222 g) et 40 mmol d'acrylate d'éthyle (AEt) (3,44 g). La température est portée à 80°C et 0,02 mmol de peroxyde de lauroyle (8,52 mg) sont ajoutées. La polymérisation dure 6 heures.

Le polymère est récupéré par évaporation, sous vide poussé, des traces de monomères résiduels. Il est analysé par G.P.C. en milieu THF et en équivalents polystyrène (voir tableau 9).

### Exemple 2.11: Homopolymère d'acrylate de méthyle

Dans un ballon de 10 ml, on introduit 1 mmol de a-(O-éthylxanthyl)-a-phénylthiopropionate d'éthyle (0,33 g) et 40 mmol d'acrylate de méthyle (3,44 g). La température est portée à 80°C et on ajoute 0,02 mmol de peroxyde de lauroyle (8,52 mg).

La polymérisation dure 6 heures.

Le polymère est récupéré par évaporation, sous vide poussé, des traces de monomères résiduels. Il est analysé par G.P.C. en milieu THF et en équivalents polystyrène (voir tableau 9).

### Exemple 2.12 : Homopolymère d'acrylate de 2-éthylhexyle

Dans un ballon de 10 ml, on introduit 1 mmol de O-éthylxanthylmalonate (0,28 g) et 40 mmol d'acrylate de 2-éthylhexyle (A2EH) (7,36 g). La température est portée à 80°C et on ajoute 0,02 mmol de peroxyde de lauroyle (8,52 mg).

La polymérisation dure 6 heures.

Le polymère est récupéré par évaporation, sous vide poussé, des traces de monomères résiduels. Il est analysé par G.P.C. en milieu THF et en équivalents polystyrène (voir tableau 9).

### Exemple 2.13 : homopolymère d'acétate de vinyle

Dans un ballon de 10 ml, on introduit 1 mmol de a-(O-éthylxanthyl)propionate d'éthyle (0,222 g) et 40 mmol d'acétate de vinyle (AVM) (3,44 g). La température est portée à 80°C et on ajoute 0,02 mmol de peroxyde de lauroyle (8,52 mg).

La polymérisation dure 8 heures au cours desquelles on réalise plusieurs ajouts d'amorceur :
- 0,01 mmol après deux heures,
- 0,01 mmol après quatre heures,
- 0,01 mmol après six heures.

Le polymère est récupéré par évaporation, sous vide poussé, des traces de monomères résiduels et analysé par G.P.C. en milieu THF et en équivalents polystyrène (voir tableau 9).

### Exemple 2.14 : Homopolymère d'acétate de vinyle

Dans un ballon de 10 ml, on introduit 1 mmol de a-(O-éthylxanthyl)propionate d'éthyle (0,222 g) et 40 mmol d'acétate de vinyle (3,44 g). La température est portée à 80°C et on ajoute 0,02 mmol de peroxyde de lauroyle (8,52 mg).

La polymérisation dure 4 heures.

Le polymère est récupéré par évaporation, sous vide poussé, des traces de monomères résiduels. Il est analysé par G.P.C. en milieu THF et en équivalents polystyrène (voir tableau 9).

### Exemple 2.15 : Homopolymère de styrène

Dans un ballon de 10 ml, on introduit 1 mmol (3,8 g) du polymère issu de l'exemple 2.1, fonctionnalisé en bout de chaîne par le groupement O-éthylxanthyle, et 40 mmol de styrène (4,16 g). La température est portée à 90°C et on ajoute 0,02 mmol de peroxyde de lauroyle (8,52 mg).

La polymérisation dure 10 heures au cours desquelles on réalise plusieurs ajouts d'amorceur :
- 0,01 mmol après deux heures,
- 0,01 mmol après quatre heures,
- 0,01 mmol après six heures,
- 0,01 mmol après huit heures.

Le polymère est récupéré par précipitation dans le méthanol et analysé par G.P.C. en milieu THF et en équivalents polystyrène (voir tableau 9).

Ce polymère est un homopolymère de styrène mais il a été obtenu comme un copolymère dibloc avec deux blocs de polystyrène.

### Exemple 2.16: Homopolymère de styrène

Dans un réacteur de 2l, on introduit :
- 0,4 g de bicarbonate de sodium,
- 5,4 g de laurysulfate de sodium, et
- 1020 g d'eau.

La température est augmentée jusqu'à 85°C.

On ajoute une solution aqueuse de persulfate d'ammonium (1,6 g d'eau + 0,8 g de persulfate d'ammonium).

Une addition continue d'un mélange contenant 400 g de styrène et 2,22 g de a-(O-éthylxanthyl)propionate d'éthyle est mise en place sur 2 heures.

La température est maintenue à 85°C pendant 1 heure supplémentaire au cours de laquelle est introduite une solution aqueuse de persulfate d'ammonium (0,8 g d'eau + 0,4 g de persulfate d'ammonium).

Le polymère obtenu est récupéré après coagulation de l'émulsion et analysé par G.P.C. en milieu THF et en équivalents polystyrène (voir tableau 9).

### Exemple 2.17: Homopolymère de styrène

Dans un ballon de 10 ml, on introduit 1 mmol de O-éthylxanthylmalonate (0,28 g) et 40 mmol de styrène (4,16 g). La température est portée à 95°C et on ajoute 0,03 mmol de peroxyde de lauroyle (12,8 mg).

La polymérisation dure 10 heures au cours desquelles plusieurs ajouts d'amorceur sont réalisés :
- 0,02 mmol après deux heures,
- 0,02 mmol après quatre heures,
- 0,02 mmol après six heures,
- 0,02 mmol après huit heures.

Le polymère est récupéré par précipitation dans le méthanol.

Il est analysé par G.P.C. en milieu THF et en équivalents polystyrène (voir tableau 9).

### Exemple 2.18 : Homopolymère d'acrylate de méthyle

Dans un ballon de 10 ml contenant 4 ml de toluène, on introduit 1 mmol de O-éthylxanthylmalonate (0,28 g) et 40 mmol d'acrylate de méthyle (3,44 g). La température est portée à 80°C et on ajoute 0,03 mmol de peroxyde de lauroyle (12,8 mg).

La polymérisation dure 26 heures au cours desquelles 0,02 mmol de peroxyde de lauroyle sont ajoutées toutes les deux heures.

Le polymère est récupéré par évaporation sous vide poussé du toluène et des traces de monomère résiduel.

Il est analysé par G.P.C. en milieu THF et en équivalents polystyrène (voir tableau 9).

### Exemple 2.19 : Homopolymère de styrène

Dans un ballon de 10 ml, on introduit 1 mmol de a-(O-phénylethyl)-a-phénylthiopropionate d'éthyle (0,406 g) et 40 mmol de styrène (4,16 g). La température est portée à 95°C et on ajoute 0,03 mmol de peroxyde de lauroyle (12,8 mg).

La polymérisation dure 16 heures au cours desquelles 0,02 mmol de peroxyde de lauroyle sont ajoutées toutes les deux heures.

Le polymère est récupéré par précipitation dans le méthanol.

Il est analysé par G.P.C. en milieu THF et en équivalents polystyrène (voir tableau 9).

### Exemple 2.20 : Homopolymère d'acrylate de méthyle

Dans un ballon de 10 ml, on introduit 1 mmol de α-(O-phényléthylxanthyl)-α-phényléthanoate d'éthyle (0,36 g) et 40 mmol d'acrylate de méthyle (3,44 g). La température est portée à 80°C et on ajoute 0,03 mmol de peroxyde de lauroyle (12,8 mg).

La polymérisation dure 11 heures au cours desquelles 0,02 mmol de peroxyde de lauroyle sont ajoutées toutes les deux heures.

Le polymère est récupéré par évaporation sous vide poussé des traces de monomère résiduel.

Il est analysé par G.P.C. en milieu THF et en équivalents polystyrène (voir tableau 9).

### Exemple 2.21 : Homopolymère d'acrylate de méthyle

Dans un ballon de 10 ml, on introduit 1 mmol de (O-éthylxanthyl)-isobutyronitrile (0,189 g) et 40 mmol d'acrylate de méthyle (3,44 g). La température est portée à 80°C et on ajoute 0,03 mmol de peroxyde de lauroyle (12,8 mg).

La polymérisation dure 6 heures au cours desquelles 0,02 mmol de peroxyde de lauroyle sont ajoutées toutes les deux heures après 2 et 4 heures.

Le polymère est récupéré par évaporation sous vide poussé des traces de monomères résiduel.

Il est analysé par G.P.C. en milieu THF et en équivalents polystyrène (voir tableau 9).

### Exemple 2.22 : Homopolymère d'acrylate de méthyle

Dans un ballon de 10 ml, on introduit 1 mmol de O-neopentylxanthylmalonate d'éthyle (0,322 g) et 40 mmol d'acrylate de méthyle (3,44 g). La température est portée à 80°C et on ajoute 0,03 mmol de peroxyde de lauroyle (12,8 mg).

La polymérisation dure 4 heures au cours desquelles 0,02 mmol de peroxyde de lauroyle sont ajoutées après deux heures.

Le polymère est récupéré par évaporation, sous vide poussé, des traces de monomère résiduel.

Il est analysé par G.P.C. en milieu THF et en équivalents polystyrène (voir tableau 9).

### Exemple 2.23 : Homopolymère d'acrylate de méthyle

Dans un ballon de 10 ml, on introduit 1 mmol de O-isobornylxanthylmalonate d'éthyle (0,388 g) et 40 mmol d'acrylate de méthyle (3,44 g). La température est portée à 80°C et on ajoute 0,03 mmol de peroxyde de lauroyle (12,8 mg).

La polymérisation dure 2h30 au cours desquelles 0,02 mmol de peroxyde de lauroyle sont ajoutées après 2 heures.

Le polymère est récupéré par évaporation, sous vide poussé, des traces de monomères résiduels.

Il est analysé par G.P.C. en milieu THF et en équivalents polystyrène (voir tableau 9).

### Exemple 2.24 : Homopolymère d'acétate de vinyle

Dans un ballon de 10 ml, on introduit 1 mmol O-isobornylmalonate d'éthyle (0,388 g) et 77 mmol d'acétate de vinyle (6,62 g). La température est portée à 70°C et on ajoute 0,01 mmol d'AIBN (azo-bis-isobutyronitrile) (1,64 mg). La polymérisation dure 24 heures au cours desquelles plusieurs ajouts d'AIBN sont réalisés :
- 1,4 mg après deux heures,
- 2,2 mg après quatre heures.

Le polymère est récupéré par évaporation sous vide poussé des traces de monomères résiduels.

Il est analysé par G.P.C. en milieu THF et en équivalents polystyrène (voir tableau 9).

### Exemple 2.25 : Homopolymères d'acide acrylique

On dissout 25 g d'acide acrylique dans 85 g d'eau, puis on neutralise la solution ainsi obtenue jusqu'à pH compris entre 6 et 7 : cette solution est la solution 1.

On dissout 0,35g de dihydrochlorure de 2,2'-azobis(2-méthylpropionamide) dans 150 g d'eau : cette solution est la solution 2.

Dans trois ballons contenant chacun une quantité différente de (O-isopropylxanthyl)valeronitrile on introduit 11 g de la solution 1 et 1,5 g de la solution 2. Les compositions des différents ballons sont résumées dans le tableau A.

La température est portée à 70°C et la polymérisation est conduite pendant 24 heures.

Le polymère est récupéré par évaporation sous vide poussé de l'eau et des traces de monomère résiduel.

Il est analysé par G.P.C. en milieu aqueux et en équivalents POE, les résultats sont rassemblés dans le tableau 1.

**Tableau 1**

| Masse de précurseur (g) | Taux de conversion (%) | Mn | Ip |
|---|---|---|---|
| 0,065 | 100 | 14 800 | 1,7 |
| 0,108 | 100 | 12 000 | 1,4 |
| 0,163 | 100 | 8 900 | 1,4 |

### Exemple 2.26 : Homopolymère d'acide acrylique

Dans un ballon de 10 ml, on introduit 1 mmol de a-(O-éthylxanthyl)propionate d'éthyle (0,222 g) et 40 mmol d'acide acrylique (2,88 g). La température est portée à 80°C et on ajoute 0,04 mmol de peroxyde de lauroyle (17 mg).

La polymérisation dure 6 heures au cours desquelles plusieurs ajouts de peroxyde de lauroyle sont effectués :
- 0,04 mmol après deux heures,
- 0,04 mmol après quatre heures.

Le polymère est récupéré par évaporation, sous vide poussé, des traces de monomère résiduel.

Il est analysé par G.P.C. en milieu aqueux et en équivalents POE (voir tableau 9).

### Exemple 2.27 : Homopolymères d'acide acrylique

Plusieurs homopolymères d'acide acrylique sont préparés de la façon suivante.

La totalité de l'acide acrylique (AA), l'AIBN et le précurseur a-(O-éthylxanthyl)propionate d'éthyle sont mélangés et introduits dans un ballon. Les quantités sont indiquées dans le tableau 2. La température est portée à 80°C.

La polymérisation dure 6 heures.

Les traces de monomère résiduel sont éliminées par évaporation.

Les résultats, obtenus après analyse G.P.C. en milieu THF et en équivalents polystyrène, sont résumés dans le tableau 2.

**Tableau 2**

| masse AA (g) | masse AIBN (mg) | masse précurseur (g) | Mn | Ip |
|---|---|---|---|---|
| 1,53 | 3,47 | 0,35 | 345 | 1,12 |
| 3,39 | 1,81 | 0,2 | 770 | 1,10 |
| 3,85 | 1,15 | 0,13 | 1060 | 1,25 |
| 4,08 | 0,92 | 0,10 | 1290 | 1,30 |

### Exemple 2.28 : Homopolymères d'acide acrylique

Plusieurs homopolymères d'acide acrylique sont préparés en solution de la façon suivante.

Dans un ballon, on dissout la totalité de l'acide acrylique (AA), l'AIBN et le précurseur a-(O-éthylxanthyl)propionate d'éthyle dans de l'acétone. Les quantités respectives de chaque ingrédient sont résumés dans le tableau 3.

La température est portée à 60°C.

La polymérisation dure 3 heures.

Les traces de monomère résiduel et le solvant sont éliminés par évaporation.

Les résultats, obtenus après analyse G.P.C. en milieu THF et en équivalents polystyrène, sont résumés dans le tableau 3.

**Tableau 3**

| masse AA (g) | masse AIBN (mg) | masse de précurseur (g) | volume de solvant (ml) | Mn | Ip |
|---|---|---|---|---|---|
| 5,07 | 2,93 | 0,3 | 8 | 550 | 1,10 |
| 3,88 | 1,12 | 0,12 | 5 | 1170 | 1,19 |
| 4,37 | 0,63 | 0,07 | 5 | 1760 | 1,29 |
| 4,56 | 0,44 | 0,05 | 5 | 1920 | 1,27 |

### Exemple 2.29 : Homopolymère d'acrylate d'éthyle

Dans un ballon, on introduit :
- 33,2 mg de a-(O-éthylxanthyl)propionate d'éthyle (1 équivalent),
- 5,01 g d'acrylate d'éthyle (160 équivalents), et
- 8,2 mg d'AIBN.

La température est portée à 70°C. La polymérisation dure 24 heures.

Le polymère est récupéré par évaporation, sous vide poussé, des traces de monomère résiduel. Il est analysé par G.P.C. en milieu THF et en équivalents polystyrène (voir tableau 9).

### Exemple 2.30 : Homopolymère d'acétate de vinyle

Dans trois ballons contenant des quantités variables de a-(O-éthylxanthyl)propionate d'éthyle, on introduit 4,3 g d'acétate de vinyle et 59,7 mg de peroxyde de lauroyle. La température est portée à 70°C et la polymérisation dure 6 heures. Les quantités de précurseur utilisées sont résumées dans le tableau 4.

Le polymère est récupéré par évaporation, sous vide poussé, des traces de monomère résiduel. Les résultats, obtenus après analyse G.P.C. en milieu THF et en équivalents polystyrène, sont résumés dans le tableau 4.

**Tableau 4**

| Masse de précurseur (g) | Taux de conversion (%) | Mn | Ip |
|---|---|---|---|
| 0,266 | 64,4 | 2100 | 1,4 |
| 0,130 | 66,6 | 4100 | 1,6 |
| 0,068 | 66,0 | 7000 | 1,9 |

### Exemple 2.31 : Homopolymère de styrène obtenu en émulsion

On introduit dans un réacteur de 1,5 I équipe d'une ancre en teflon :
- 525 g d'eau,
- 0,2 g d'hydrogénocarbonate de sodium et
- 10 g de laurylsulfate de sodium.

La température est portée à 70°C et on additionne en une fois 20 g de styrène et la totalité du précurseur a-(O-éthylxanthyl)propionate d'éthyle.

La température est ensuite augmentée jusqu'à 85°C et on ajoute en une fois 0,4 g de persulfate d'ammonium en solution dans 16,13 g d'eau.

Une alimentation continue de styrène (180 g) est alors mise en place sur quatre heures.

La température est maintenue à 85°C pendant 2 heures supplémentaires.

Les résultats, obtenus après analyse G.P.C. en milieu THF et en équivalents polystyrène, sont résumés dans le tableau 5.

**Tableau 5**

| Masse de précurseur (9) | Taux de conversion (%) | Mn | Ip |
|---|---|---|---|
| 2 | 88 | 15 400 | 1,9 |
| 1 | 90 | 29 500 | 1,9 |

### Exemple 2.32 : Homopolymère de styrène obtenu en émulsion

On introduit dans un réacteur de 1,5 l équipé d'une ancre en teflon :
- 475 g d'eau,
- 0,2 g d'hydrogénocarbonate de sodium et
- 10 g de laurylsulfate de sodium .

La température est portée à 70°C et on additionne en une fois :
- 20 g de styrène, et
- 2 g de a-(O-éthylxanthyl)propionate d'éthyle.

La température est ensuite augmentée jusqu'à 85°C et on ajoute en une fois 0,4 g de persulfate d'ammonium en solution dans 16,13 g d'eau.

On introduit dans le réacteur en continu et en parrallèle :
- 180 g de styrène sur 8 heures,
- 0,4 g de persulfate d'ammonium dans 50,4 g d'eau sur 10 heures.

Des échantillons sont prélevés régulièrement et analysés en G.P.C. en milieu THF et en équivalents polystyrène. Les résultats obtenus sont résumés dans le tableau 6.

**Tableau 6**

| Temps (h) | Taux de conversion (%) | Mn | Ip |
|---|---|---|---|
| 1 | 10,1 | 2 500 | 1,8 |
| 2 | 18,6 | 3 300 | 1,8 |
| 4 | 39,2 | 6 250 | 1,9 |
| 6 | 56,3 | 8 100 | 1,9 |
| 8 | 73,3 | 10 000 | 1,9 |
| 24 | 75,7 | 10 500 | 1,9 |

On observe une augmentation linéaire des masses moléculaires avec la conversion, ce qui prouve le caractère contrôlé de la polymérisation radicalaire.

### Exemple 2.33 : Homopolymère d'acrylate d'éthyle

On prépare une solution contenant :
- 17,64 g d'acrylate d'éthyle,
- 0,459 g de a-(O-éthylxanthyl)propionate d'éthyle, et
- 0,036 g d'AIBN.

On introduit 1 g de cette solution dans 7 tubes qui serviront à établir la cinétique de polymérisation.

Ces tubes sont ensuite portés à 70°C et arrêtés à des temps différents. Pour chaque tube, le polymère est récupéré par évaporation des traces de monomère résiduel et analysé en G.P.C. en milieu THF et en équivalents polystyrène.

Les résultats obtenus sont rassemblés dans le tableau 7.

**Tableau 7**

| Temps (min) | Taux de conversion (%) | Mn | Ip |
|---|---|---|---|
| 12 | 0 | 1 900 | 3,4 |
| 21 | 17 | 4 200 | 2,5 |
| 30 | 32,3 | 4 300 | 2,5 |
| 42 | 43,5 | 4 800 | 2,4 |
| 53 | 46,6 | 4 800 | 2,5 |
| 66 | 71,4 | 6 700 | 1,9 |
| 124 | 80,4 | 7 100 | 1,9 |

On observe une augmentation linéaire des masses moléculaires avec la conversion, ce qui prouve le caractère contrôlé de la polymérisation radicalaire.

### Exemple 2.34 : Homopolymère d'acétate de vinyle

On prépare une solution contenant :
- 7,35g d'acétate de vinyle,
- 0,229 g de a-(O-éthylxanthyl)propionate d'éthyle, et
- 0,018 g d'AIBN.

On introduit 1 g de cette solution dans 4 tubes qui serviront à établir la cinétique de polymérisation.

Les tubes sont ensuite portés à 70°C et arrêtés à des temps différents. Pour chaque tube, le polymère est récupéré par évaporation des traces de monomère résiduel et analysé en G.P.C. en milieu THF et en équivalents polystyrène.

Les résultats obtenus sont rassemblés dans le tableau 8.

**Tableau 8**

| Temps (min) | Taux de conversion (%) | Mn | Ip |
|---|---|---|---|
| 12 | 0 | | |
| 28 | 13,8 | 1 200 | 1,4 |
| 38 | 77,8 | 4 300 | 1,7 |
| 51 | 83,9 | 4 300 | 1,7 |

On observe une augmentation linéaire des masses moléculaires avec la conversion, ce qui prouve le caractère contrôlé de la polymérisation radicalaire.

### Résultats des exemples 2.1 à 2.24, 2.26 et 2.29 :

L'analyse par G.P.C. des homopolymères précédemment obtenus permet de mesurer leur masse moyenne en nombre (Mn). Elle permet également de mesurer leur masse moyenne en poids (Mw) et donc leur indice de polydispersité (Ip), correspondant au rapport de Mw sur Mn.

Systématiquement, les chromatogrammes G.P.C. sont réalisés en double détection réfractométrie (RI) et absorbtion UV (UV). La longueur d'onde de détection UV correspond au maximum d'absorption de la fonction xanthate fixée à l'extrémité de la chaîne selon la formule revendiquée. On obtient, pour tous les échantillons analysés, une superposition parfaite des chromatogrammes obtenus par l'une ou l'autre détection. Ce résultat indique une fonctionnalisation des extrémités de chaînes et constitue une preuve supplémentaire de la structure supposée des polymères selon l'invention.

**Tableau 9**

| **Exemples** | **Monomère** | **Mn** | **Ip** | **Taux de conversion** |
|---|---|---|---|---|
| Ex. 2.1 | styrène | 3800 | 2 | |
| Ex. 2.2 | styrène | 5200 | 2,1 | |
| Ex. 2.3 | styrène | 7900 | 2,5 | |
| Ex. 2.4 | styrène | 3200 | 1,8 | |
| Ex. 2.5 | styrène | 3300 | 1,9 | |
| Ex. 2.6 | AMe | 3500 | 1,8 | |
| Ex. 2.7 | AMe | 3750 | 1,7 | |
| Ex. 2.8 | AMe | 7300 | 1,7 | |
| Ex. 2.9 | AMe | 3000 | 1,4 | |
| Ex. 2.10 | AEt | 3700 | 1,6 | |
| Ex. 2.11 | AMe | 3500 | 1,35 | |
| Ex. 2.12 | A2EH | 6900 | 1,5 | |
| Ex. 2.13 | AVM | 3200 | 1,35 | |
| Ex. 2.14 | AVM | 2100 | 1,18 | |
| Ex. 2.15 | styrène | 6200 | 2 | |
| Ex. 2.16 | styrène | 3800 | 1,6 | |
| Ex. 2.17 | styrène | 4300 | 1,9 | 78 |
| Ex. 2.18 | AMe | 3900 | 1,5 | 95 |
| Ex. 2.19 | styrène | 3400 | 1,8 | 77 |
| Ex. 2.20 | AMe | 3100 | 1,6 | 60 |
| Ex. 2.21 | AMe | 3600 | 1,4 | 75 |
| Ex. 2.22 | AMe | 5100 | 1,4 | 90 |
| Ex. 2.23 | AMe | 4000 | 1,7 | 88 |
| Ex. 2.24 | AVM ? | 2500 | 1,8 | 29 |
| Ex. 2.26 | AA | 6600 | 2,3 | 97 |
| Ex. 2.29 | AEt | 29 400 | 1,9 | 93 |

### Exemple 2.35 : homopolymère d'acétate de vinyle

On introduit dans un ballon de 10 ml :
- 0,899g d'acétate de vinyle (soit environ 10 équivalents),
- 0,220 g de a-(O-éthylxanthyl)propionate d'éthyle (1 équivalent), et
- 17,2 mg d'AIBN.

La température est portée à 70°C. La polymérisation dure 24 heures.

Le polymère est récupéré par évaporation, sous vide poussé, des traces de monomères résiduels et analysé par MALDI-TOF, sur une matrice DHB (acide dihydroxybenzoïque). Les résultats sont rassemblés dans le tableau 10.

**Tableau 10**

| Nombre d'unités AVM | Masse théorique (g) | Masse MALDI-TOF (g) |
|---|---|---|
| 7 | 833 | 831,556 |
| 8 | 919 | 917,458 |
| 9 | 1005 | 1003,638 |

Dans le tableau 10, les masses théoriques sont calculées en supposant une structure conforme à la formule :

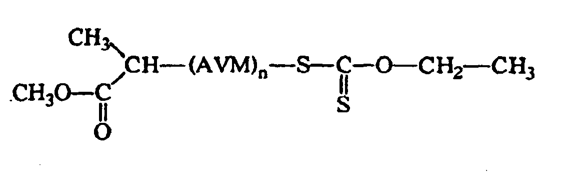

II faut rajouter 23 g à la masse obtenue car les espèces détectées sont sous forme de sel de sodium. L'accord excellent entre les masses théoriques et mesurées par MALDI-TOF sont une confirmation du mécanisme supposé pour la polymérisation et de la structure des polymères obtenus.

### EXEMPLES 3- SYNTHESES DE COPOLYMERES A BLOCS

### Exemple 3.1 : Copolymère à blocs p(AMe-b-St)

Dans un ballon de 10 ml, on introduit :
- 1 mmol de a-(O-éthylxanthyl)propionate d'éthyle (0,222 g), et
- 20 mmol d'acrylate de méthyle (1,72 g).

Le mélange est porté à 80°C et 0,02 mmol de peroxyde de lauroyle (8,52 mg) sont ajoutées. Le milieu est maintenu en température pendant 45 min à l'issu desquelles il est figé. Le milieu réactionnel est ensuite dissous dans 3 ml de toluène puis évaporé à sec, sous vide. Cette opération est répétée trois fois pour éliminer les traces d'acrylate de méthyle résiduel. Cette synthèse conduit à un précurseur utilisable pour la préparation d'un copolymère à blocs.

On introduit ensuite 20 mmol de styrène (2,08 g) dans le réacteur. La température est portée à 110°C et on ajoute 0,02 mmol de peroxyde de lauroyle (8,52 mg). Cette deuxième étape dure 6 heures au cours desquelles on réalise plusieurs ajouts d'amorceur :
- 0,01 mmol après deux heures,
- 0,01 mmol après quatre heures.

Le copolymère obtenu est récupéré par précipitation dans le méthanol et analysé en G.P.C. double détection : réfractométrie et spectrométrie UV. Le solvant de G.P.C. est le THF et les masses sont données en équivalents polystyrène. Les résultats sont donnés dans le tableau 12.

### Exemple 3.2 : Copolymère à blocs p(St-b-AMe)

Dans un ballon de 10 ml, on introduit :
- 1 mmol de a-(O-éthylxanthyl)propionate d'éthyle (0,222 g),
- 20 mmol de styrène (2,08 g), et
- 1 ml de toluène.

Le milieu réactionnel est porté à 110°C et on introduit 0,025 mmol de peroxyde de lauroyle (10,6 mg) dans le réacteur. Cette première étape dure 9 heures au cours desquelles on réalise plusieurs ajouts d'amorceur :
- 0,01 mmol après deux heures,
- 0,01 mmol après quatre heures,
- 0,01 mmol après six heures,
- 0,01 mmol après huit heures.

Le milieu est ensuite refroidi jusqu'à 80°C et on introduit :
- 20 mmol d'acrylate de méthyle (1,72 g), et
- 0,03 mmol de peroxyde de lauroyle (12,8 mg).

Cette seconde étape dure 7 heures au cours desquelles on réalise plusieurs additions d'amorceur:
- 0,01 mmol après deux heures,
- 0,01 mmol après quatre heures,
- 0,01 mmol après six heures.

Le polymère obtenu est récupéré et analysé comme celui de l'exemple 3.1. Les résultats sont donnés dans le tableau 11.

### Exemple 3.3 : Copolymère à blocs p(St-b-AMe)

Dans un ballon de 10 ml, on introduit :
- 1 mmol de [1-(O-éthylxanthyl)éthyl]benzène (0,226 g), et
- 20 mmol de styrène (2,08 g).

La température est portée à 90°C et on ajoute 0,03 mmol de peroxyde de lauroyle (12,8 mg). La température est maintenue à 90°C pendant 10 heures au cours desquelles on réalise plusieurs ajouts d'amorceur :
- 0,01 mmol après deux heures,
- 0,01 mmol après quatre heures,
- 0,01 mmol après six heures,
- 0,01 mmol après huit heures.

Le milieu réactionnel est ensuite refroidi à 80°C et on introduit :
- 20 mmol d'acrylate de méthyle (1,72 g), et
- 0,02 mmol de peroxyde de lauroyle (8,52 mg).

Cette deuxième étape dure 8 heures au cours desquelles on réalise plusieurs ajouts d'amorceur :
- 0,01 mmol après deux heures,
- 0,01 mmol après quatre heures,
- 0,01 mmol après six heures,
- 0,01 mmol après sept heures.

Le polymère obtenu est récupéré et analysé comme celui de l'exemple 3.1. Les résultats sont donnés dans le tableau 12.

### Exemple 3.4: Copolymère à blocs p(St-b-AMe-b-St)

Dans un ballon de 10 ml, on introduit :
- 1 mmol de [1-(O-éthylxanthyl)éthyl]benzène (0,226 g), et
- 20 mmol de styrène (2,08 g).

La température est portée à 90°C et on ajoute 0,03 mmol de peroxyde de lauroyle (12,8 mg). La température est maintenue à 90°C pendant 10 heures au cours desquelles on réalise plusieurs ajouts d'amorceur :
- 0,01 mmol après deux heures,
- 0,01 mmol après quatre heures,
- 0,01 mmol après six heures,
- 0,01 mmol après huit heures.

Le milieu réactionnel est ensuite refroidi à 80°C et on introduit :
- 20 mmol d'acrylate de méthyle, et
- 0,02 mmol de peroxyde de lauroyle.

Cette deuxième étape dure 8 heures au cours desquelles on réalise plusieurs ajouts d'amorceur :
- 0,01 mmol après deux heures,
- 0,01 mmol après quatre heures,
- 0,01 mmol après six heures,
- 0,01 mmol après sept heures.

La température est de nouveau portée à 90°C et on introduit :
- 20 mmol de styrène (2,08 g), et
- 0,02 mmol de peroxyde de lauroyle.

Cette troisième étape dure 8 heures au cours desquelles on réalise plusieurs ajouts d'amorceur :
- 1 mmol après deux heures,
- 1 mmol après quatre heures,
- 1 mmol après six heures.

Le polymère obtenu est récupéré et analysé comme celui de l'exemple 3.1. Les résultats sont donnés dans le tableau 12.

### Exemple 3.5 : Copolymère à blocs p(AMe-b-St)

Dans un ballon, on introduit :
- 1 mmol de [1-(O-éthylxanthyl)éthyl]benzène (0,226 g), et
- 20 mmol d'acrylate de méthyle (1,72 g).

La température est portée à 80°C et on ajoute 0,02 mmol de peroxyde de lauroyle. Cette première étape dure 8 heures au cours desquelles sont réalisés plusieurs ajouts d'amorceur :
- 1 mmol après deux heures,
- 1 mmol après quatre heures,
- 1 mmol après six heures.

La température est ensuite augmentée jusqu'à 90°C et on introduit :
- 20 mmol de styrène, et
- 0,02 mmol de peroxyde de lauroyle. Cette deuxième étape dure 14 heures au cours desquelles on réalise plusieurs ajouts d'amorceur :

- 0,01 mmol après deux heures,
- 0,01 mmol après quatre heures,
- 0,01 mmol après six heures,
- 0,01 mmol après huit heures,
- 0,01 mmol après dix heures,
- 0,01 mmol après douze heures.

Le polymère obtenu est récupéré et analysé comme celui de l'exemple 3.1. Les résultats sont donnés dans le tableau 12.

### Exemple 3.6 : Copolymère à blocs p(AEt-b-AVM)

On introduit dans un ballon :
- 1,881 g d'acrylate d'éthyle,
- 0,111 g de a-(O-éthylxanthyl)propionate d'éthyle, et
- 8,6 mg de peroxyde de lauroyle.

La température est portée à 80°C. La polymérisation dure 6 heures au cours desquelles sont réalisés plusieurs ajouts de peroxyde de lauroyle:
- 9,2 mg après 2 heures,
- 9,0 mg après 4 heures.

Après refroidissement, on élimine les traces d'acrylate d'éthyle résiduel par évaporation sous vide poussé et une petite fraction du polymère est prélevée pour être analysé en G.P.C. en milieu THF et en équivalents polystyrène. Les résultats sont les suivants :
- taux de conversion : 98,3 %,
- Mn = 2 800,
- Ip = 1,8.

On introduit ensuite 1,853 g d'acétate de vinyle et 8,6 mg de peroxyde de lauroyle dans le ballon. La température est portée à 80°C. La polymérisation dure 6 heures au cours desquelles, on réalise plusieurs ajouts de peroxyde de lauroyle:
- 8,6 mg après 2 heures,
- 8,5 mg après 4 heures.

Les traces d'acétate de vinyle résiduel sont éliminées par évaporation sous vide poussé. Les résultats sont donnés dans le tableau 12.

### Exemple 3.7: Copolymère à blocs p(AEt-b-AtBu)

On introduit dans un ballon :
- 1,881 g d'acrylate d'éthyle,
- 0,111 g de a-(O-éthylxanthyl)propionate d'éthyle et,
- 9,0 mg de peroxyde de lauroyle. La température est portée à 80°C. La polymérisation dure 6 heures au cours desquelles on réalise plusieurs ajouts de peroxyde de lauroyle:

- 8,6 mg après 2 heures,
- 8,9 mg après 4 heures.

Après refroidissement, les traces d'acrylate d'éthyle résiduel sont éliminées par évaporation sous vide poussé et une petite fraction du polymère est prélevée pour être analysé en G.P.C. en milieu THF et en équivalents polystyrène:
- taux de conversion : 98,6%,
- Mn = 2 600,
- Ip = 1,9.

On introduit ensuite dans le ballon :
- 2,7467 g d'acrylate de tertiobutyle, et
- 8,5 mg de peroxyde de lauroyle.

La température est portée à 80°C. La polymérisation dure 6 heures au cours desquelles on réalise plusieurs ajouts de peroxyde de lauroyle:
- 8,7 mg après 2 heures,
- 8,5 mg après 4 heures.

Les traces d'acrylate de tertiobutyle résiduel sont éliminées par évaporation sous vide poussé et le copolymère obtenu est analysé par G.P.C. en milieu THF et en équivalents polystyrène. Les résultats sont donnés dans le tableau 12.

### Exemple 3.8 : Copolymère à blocs p(AtBu-b-AVM)

On introduit dans un ballon :
- 2,737 g d'acrylate de tertiobutyle,
- 0,111 g de a-(O-éthylxanthyl)propionate d'éthyle, et
- 8,7 mg de peroxyde de lauroyle.

La température est portée à 80°C. La polymérisation dure 6 heures au cours desquelles on réalise plusieurs ajouts de peroxyde de lauroyle:
- 8,9 mg après 2 heures,
- 8,9 mg après 4 heures.

Après refroidissement, les traces d'acrylate de tertiobutyle résiduel sont éliminées par évaporation sous vide poussé et une petite fraction du polymère est prélevée pour être analysé en G.P.C. en milieu THF et en équivalents polystyrène :
- taux de conversion : 98,3 %,
- Mn = 2 500,
- Ip = 2,4.

On introduit ensuite dans le ballon :
- 1,851 g d'acétate de vinyle, et
- 8,5 mg de peroxyde de lauroyle.

La température est portée à 80°C. La polymérisation dure 6 heures au cours desquelles on réalise plusieurs ajouts de peroxyde de lauroyle:
- 8,7 mg après 2 heures,
- 8,5 mg après 4 heures.

Les traces d'acétate de vinyle résiduel sont éliminées par évaporation sous vide poussé et le copolymère obtenu est analysé par G.P.C. en milieu THF et en équivalents polystyrène. Les résultats sont donnés dans le tableau 12.

### Exemple 3.9 : Copolymère à blocs p(AtBu-b-AEt)

On introduit dans un ballon :
- 2,737 g d'acrylate de tertiobutyle,
- 0,111 g de -(O-éthylxanthyi)propionate d'éthyle,et
- 8,4 mg de peroxyde de lauroyle.

La température est portée à 80°C. La polymérisation dure 6 heures au cours desquelles sont réalisés plusieurs ajouts de peroxyde de lauroyle:
- 9,0 mg après 2 heures,
- 8,7 mg après 4 heures.

Après refroidissement, les traces d'acrylate de tertiobutyle résiduel sont éliminées par évaporation sous vide poussé et une petite fraction du polymère est prélevée pour être analysé en G.P.C. en milieu THF et en équivalents polystyrène :
- taux de conversion : 98,1 %,
- Mn = 2 500,
- Ip=2,5.

On introduit dans le ballon:
- 1,896 g d'acrylate d'éthyle, et
- 8,8 mg de peroxyde de lauroyle.

La température est portée à 80°C. La polymérisation dure 6 heures au cours desquelles on réalise plusieurs ajouts de peroxyde de lauroyle:
- 8,7 mg après 2 heures,
- 8,5 mg après 4 heures.

Les traces d'acrylate d'éthyle résiduel sont éliminées par évaporation sous vide poussé et le copolymère obtenu est analysé par G.P.C. en milieu THF et en équivalents polystyrène. Les résultats sont donnés dans le tableau 12.

### Exemple 3.10 : Copolymère à blocs p(AEt-b-St)

On introduit dans un ballon :
- 1,881 g d'acrylate d'éthyle,
- 0,111 g de a-(O-éthylxanthyl)propionate d'éthyle, et
- 8,8 mg de peroxyde de lauroyle.

La température est portée à 80°C. La polymérisation dure 6 heures au cours desquelles on réalise plusieurs ajouts de peroxyde de lauroyle:
- 9,0 mg après 2 heures,
- 8,5 mg après 4 heures.

Après refroidissement, les traces d'acrylate d'éthyle résiduel sont éliminées par évaporation sous vide poussé et une petite fraction du polymère est prélevée pour être analysé en G.P.C. en milieu THF et en équivalents polystyrène :
- taux de conversion : 97,5 %,
- Mn = 3 000,
- Ip=1,8.

On introduit ensuite dans le ballon:
- 2,231 g de styrène, et
- 9,0 mg de peroxyde de lauroyle.

La température est portée à 115°C. La polymérisation dure 6 heures au cours desquelles on réalise plusieurs ajouts de peroxyde de lauroyle:
- 8,7 mg après 2 heures,
- 9,9 mg après 4 heures.

Les traces de styrène résiduel sont éliminées par évaporation sous vide poussé et le copolymère obtenu est analysé par G.P.C. en milieu THF et en équivalents polystyrène. Les résultats sont donnés dans le tableau 12.

### Exemple 3.11 : Copolymère à blocs p(AtBu-b-St)

On introduit dans un ballon ;
- 2,737 g d'acrylate de tertiobutyle,
- 0,111g de a-(O-éthylxanthyl)propionate d'éthyle, et
- 9,0 mg de peroxyde de lauroyle.

La température est portée à 80°C. La polymérisation dure 6 heures au cours desquelles on réalise plusieurs ajouts de peroxyde de lauroyle :
- 8,5 mg après 2 heures,
- 9,6 mg après 4 heures.

Après refroidissement, les traces d'acrylate de tertiobutyle résiduel sont éliminées par évaporation sous vide poussé et une petite fraction du polymère est prélevée pour être analysé en G.P.C. en milieu THF et en équivalents polystyrène :
- taux de conversion : 98,4 %,
- Mn = 2 800,
- Ip = 2,4.

On introduit ensuite dans le ballon :
- 2,246 g de styrène, et
- 8,4 mg de peroxyde de lauroyle.

La température est portée à 115°C. La polymérisation dure 6 heures au cours desquelles on réalise plusieurs ajouts de peroxyde de lauroyle:
- 9,2 mg après 2 heures,
- 9,2 mg après 4 heures.

Les traces de styrène résiduel sont éliminées par évaporation sous vide poussé et le copolymère obtenu est analysé par G.P.C. en milieu THF et en équivalents polystyrène. Les résultats sont donnés dans le tableau 12.

### Exemple 3.12 : Copolymère à blocs p(AEt-b-AtBu-b-St)

On introduit dans un ballon :
- 2,248 g de styrène,
- la totalité du copolymère obtenu à l'exemple 3.7, et
- 8,3 mg de peroxyde de lauroyle.

La température est portée à 115°C. La polymérisation dure 6 heures au cours desquelles on réalise plusieurs ajouts de peroxyde de lauroyle;
- 9,0 mg après 2 heures,
- 8,5 mg après 4 heures.

Les traces de styrène résiduel sont éliminées par évaporation sous vide poussé et le copolymère obtenu est analysé par G.P.C. en milieu THF et en équivalents polystyrène. Les résultats sont donnés dans le tableau 12.

### Exemple 3.13: Copolymère à blocs p(St-b-AEt)

On introduit dans un ballon :
- 2,224 g de styrène,
- 0,111g de a-(O-éthylxanthyl)propionate d'éthyle, et
- 8,6 mg de peroxyde de lauroyle.

La température est portée à 115°C. La polymérisation dure 6 heures au cours desquelles on réalise plusieurs ajouts de peroxyde de lauroyle:
- 8,7 mg après 2 heures,
- 8,3 mg après 4 heures.

Après refroidissement, les traces de styrène résiduel sont éliminées par évaporation sous vide poussé et une petite fraction du polymère est prélevée pour être analysé en G.P.C. en milieu THF et en équivalents polystyrène :
- taux de conversion : 98,0 %,
- Mn =3 500,
- Ip = 2,2.

On introduit ensuite dans le ballon :
- 2 ml de toluène,
- 1,892 ? d'acrylate d'éthyle, et
- 8,5 mg de peroxyde de lauroyle.

La température est portée à 80°C. La polymérisation dure 6 heures au cours desquelles on réalise plusieurs ajouts de peroxyde de lauroyle:
- 9,4 mg après 2 heures,
- 9,2 mg après 4 heures.

Les traces d'acrylate d'éthyle résiduel sont éliminées par évaporation sous vide poussé et le copolymère obtenu est analysé par G.P.C. en milieu THF et en équivalents polystyrène. Les résultats sont donnés dans le tableau 12.

### Exemple 3.14 : Copolymère à blocs p(St-b-AtBu)

On introduit dans un ballon:
- 2,224 g de styrène,
- 0,111 g de a-(O-éthylxanthyl)propionate d'éthyle, et
- 8,6 mg de peroxyde de lauroyle.

La température est portée à 115°C. La polymérisation dure 6 heures au cours desquelles sont réalisés plusieurs ajouts de peroxyde de lauroyle:
- 8,7 mg après 2 heures,
- 9,5 mg après 4 heures.

Après refroidissement, les traces de styrène résiduel sont éliminées par évaporation sous vide poussé et une petite fraction du polymère est prélevée pour être analysé en G.P.C. en milieu THF et en équivalents polystyrène :
- taux de conversion : 97,2 %,
- Mn = 3 400,
- Ip=2,2.

On introduit ensuite dans le ballon :
- 2 ml de toluène,
- 2,747 g d'acrylate de tertiobutyle, et
- 9,3 mg de peroxyde de lauroyle.

La température est portée à 80°C. La polymérisation dure 6 heures au cours desquelles on réalise plusieurs ajouts de peroxyde de lauroyle:
- 8,7 mg après 2 heures
- 9,3 mg après 4 heures.

Les traces d'acrylate de tertiobutyle résiduel sont éliminées par évaporation sous vide poussé et le copolymère obtenu est analysé par G.P.C. en milieu THF et en équivalents polystyrène. Les résultats sont donnés dans le tableau 12.

### Exemple 3.15 : Copolymère à blocs p(AtBu-b-AEt-b-St)

On introduit dans un ballon :
- 2 ml de toluène,
- 2,229 g de styrène,
- la totalité du copolymère obtenu à l'exemple 3.9, et
- 9,1 mg de peroxyde de lauroyle.

La température est portée à 120°C. La polymérisation dure 6 heures au cours desquelles on réalise plusieurs ajouts de peroxyde de lauroyle:
- 8,5 mg après 2 heures,
- 8,5 mg après 4 heures.

Les traces de styrène résiduel sont éliminées par évaporation sous vide poussé et le copolymère obtenu est analysé par G.P.C. en milieu THF et en équivalents polystyrène. Les résultats sont donnés dans le tableau 12.

### Exemple 3.16 : Copolymères à blocs pABu-b-APV (APV : alcool polyvinylique)

Ces copolymères sont obtenus par hydrolyse de leurs équivalents p(ABu-b-AVM).

On prépare une série de copolymères à blocs p(ABu-b-AVM). Tous les copolymères sont obtenus selon le mode opératoire général suivant.

On introduit dans un ballon :
- l'acrylate de butyle (ABu),
- le a-(O-éthylxanthyl)propionate d'éthyle, et
- environ un tiers de la quantité globale de peroxyde de lauroyle nécessaire à cette première étape.

La température est portée à 80°C. La polymérisation dure 6 heures au cours desquelles sont réalisés deux ajouts d'amorceur après 2 et 4 heures. Chacun des ajouts correspond à environ un tiers de la quantité globale de peroxyde de lauroyle de la première étape.

Les traces d'acrylate de butyle résiduel sont éliminées par évaporation et une petite fraction du polymère est prélevée pour être analysée.

On ajoute ensuite dans le ballon :
- l'acétate de vinyle, et
- environ un tiers de la quantité globale de peroxyde de lauroyle nécessaire à cette deuxième étape.

La température est de nouveau portée à 80°C. La polymérisation dure 6 heures et le reste de l'amorceur est ajouté de la même façon que pour la synthèse du premier bloc. Le copolymère à blocs est récupéré après évaporation des traces d'acétate de vinyle résiduel et analysé en G.P.C. en milieu THF et en équivalents polystyrène.

Les quantités d'ingrédients utilisées pour chacun des copolymères ainsi que les résultats obtenus sont résumés dans le tableau 11.

**Tableau 11**

| polymérisation 1 | | | homopolymère | | polymérisation 2 | | polymère à blocs | |
|---|---|---|---|---|---|---|---|---|
| masse ABu (g) | masse précurseur (g) | masse perox (mg) | Mn | Ip | masse AVM (g) | masse perox (mg) | Mn | Ip |
| 13,713 | 1,126 | 0,257 | 2 500 | 1,6 | 13,789 | 0,263 | 4 500 | 1,4 |
| 13,695 | 1,125 | 0,257 | 2 500 | 1,6 | 18,395 | 0,265 | 5 300 | 1,4 |
| 19,158 | 0,791 | 0,347 | 3 900 | 2,0 | 6,461 | 0,350 | 5 600 | 1,7 |
| 19,157 | 0,798 | 0,360 | 3 900 | 2,0 | 12,872 | 0,352 | 7200 | 1,6 |
| 19,242 | 1,568 | 0,370 | 2 500 | 1,6 | 6,470 | 0,365 | 3 200 | 1,5 |
| 19,295 | 1,568 | 0,371 | 2 500 | 1,7 | 12,969 | 0,359 | 4100 | 1,4 |
| 6,71 | 1,067 | 0,246 | 1 500 | 1,4 | 22,027 | 0,497 | 5 900 | 1,5 |

Les polymères à blocs obtenus sont ensuite hydrolyses : ils sont dissous dans le méthanol, à 50 % d'extrait sec, puis une quantité catalytique de soude est ajoutée et le milieu réactionnel est porté à 60°C pendant 1 heure.

Les copolymères pABu-b-APV sont récupérés par évaporation du méthanol.

### Exemple 3.17 : Cpolymère à blocs pAA-b-APV

Ce copolymère est obtenu par hydrolyse du copolymère correspondant p(AtBu-b-AVM).

On introduit dans un ballon :
- 2,737 g d'acrylate de tertiobutyle,
- 0,111 g de a-(O-éthylxanthyl)propionate d'éthyle, et
- 8,5 mg de peroxyde de lauroyle.

La température est portée à 80°C.

La polymérisation dure 6 heures au cours desquelles sont réalisés plusieurs ajouts de peroxyde de lauroyle:
- 9,5 mg après 2 heures,
- 9,8 mg après 4 heures.

Après refroidissement, les traces d'acrylate de tertiobutyle résiduel sont éliminées par évaporation sous vide poussé.

Une petite fraction du polymère est prélevée pour être analysé en G.P.C. en milieu THF et en équivalents polystyrène :
- taux de conversion : 99,0 %,
- Mn = 4300,
- Ip=1,7.

On introduit ensuite dans le ballon :
- 1,831 g d'acétate de vinyle, et
- 8,6 mg de peroxyde de lauroyle.

La température est portée à 80°C.

La polymérisation dure 6 heures au cours desquelles sont réalisés plusieurs ajouts de peroxyde de lauroyle:
- 9,2 mg après 2 heures,
- 9,2 mg après 4 heures.

Les traces d'acétate de vinyle résiduel sont éliminées par évaporation sous vide poussé et le copolymère obtenu est analysé par G.P.C. en milieu THF et en équivalents polystyrène. Les résultats sont donnés dans le tableau 12.

Le copolymère obtenu est ensuite hydrolysé de la manière suivante.

Le copolymère est introduit dans un mélange eau/méthanol (10 ml / 4 ml). Trois gouttes d'acide sulfurique à 95 % sont ajoutées de façon à obtenir un pH de 1. La température est portée à 70°C. Après 2h15, on ajoute 8 ml de méthanol et, après 5 heures, trois nouvelles gouttes d'acide sulfurique à 95 %. Cette première étape dure 24 heures et permet de transformer le bloc polyacrylate de tertiobutyle en polyacide acrylique.

La température est ensuite ramenée à l'ambiante et le solvant (eau + méthanol) est éliminé par évaporation. Le résidu sec obtenu est redissous dans 30 ml de méthanol et une quantité catalytique de NaOH est ajoutée. La température est de nouveau portée à 70°C où elle est maintenue pendant 24 heures.

Le copolymère polyacide acrylique/alcool polyvinylique obtenu est récupéré par évaporation du méthanol.

### Exemple 3.18 : Copolymère à blocs p(ABu-b-AEt)

On introduit dans un réacteur muni d'un système d'agitation :
- 60 g d'acétate d'isopropyle,
- 90 g d'acrylate de butyle, et
- 6,9 g de a-(O-éthylxanthyl)propionate d'éthyle.

La température est portée à 80°C. Ont additionne en une fois 0,18 g d'AIBN en solution dans 5 g d'acétate d'isopropyl.

Quinze minutes plus tard on met en place une alimentation continue sur 2 heures d'une solution contenant :
- 180 g d'acétate d'isopropyle,
- 274 g d'acrylate de butyle, et
- 0,5 g d'AIBN.

La température et l'agitation sont maintenues 1h45 après la fin d'addition du premier monomère.

Une petite fraction du polymère précurseur est prélevée et analysée en G.P.C. en milieu THF et en équivaletns polystyrène :
- Mn = 7 000,
- Ip = 1,9.

Une deuxième alimentation continue est alors mise en place sur 1 heure. Elle consiste en une solution contenant :
- 10 g d'acétate d'isopropyle,
- 163 g d'acrylate d'éthyle, et
- 0,32 g d'AIBN.

La température et l'agitation sont maintenues encore une heure après la fin d'addition du deuxième monomère.

Le copolymère final est récupéré par évaporation du solvant et des traces de monomères résiduel et analysé en G.P.C. en milieu THF et en équivalents polystyrène. Les résultats sont donnés dans le tableau 12.

### Exemple 3.19: Copolymère à blocs p(ABu-b-AEt)

On introduit dans un réacteur muni d'un système d'agitation :
- 45 g d'acétate d'isopropyle,
- 75 g d'acrylate de butyle, et
- 6,9 g de a-(O-éthylxanthyl)propionate d'éthyle.

La température est portée à 80°C et on additionne en une fois 0,15 g d'AIBN en solution dans 5 g d'acétate d'isopropyle.

Vingt minutes plus tard, on met en place une alimentation continue sur 1h30 d'une solution contenant :
- 117 g d'acétate d'isopropyle,
- 175 g d'acrylate de butyle, et
- 0,35 g d'AIBN.

La température et l'agitation sont maintenues 2h10 après la fin d'addition du premier monomère.

Une petite fraction du polymère précurseur est prélevée et analysée en G.P.C. en milieu THF et en équivalents polystyrène :
- Mn = 5 200,
- Ip = 1,8.

Une deuxième alimentation continue est alors mise en place sur 1h40. Elle consiste en une solution contenant :
- 168 g d'acétate d'isopropyle,
- 252 g d'acrylate d'éthyle, et
- 0,5g d'AIBN.

La température et l'agitation sont maintenues encore 20 min après la fin d'addition du deuxième monomère.

Le copolymère final est récupéré par évaporation du solvant et des traces de monomères résiduel et analysé en G.P.C. en milieu THF et en équivalents polystyrène. Les résultats sont donnés dans le tableau 12.

### Résultats des exemples 3.1. à 3.19.

**Tableau 12**

| **Exemples** | **Monomères** | | | **Mn** | **Ip** | **Taux conversion** |
|---|---|---|---|---|---|---|
| | **M1** | **M2** | **M3** | | | |
| Ex. 3.1 | AMe | St | - | 4650 | 1,6 | |
| Ex. 3.2 | St | AMe | - | 4300 | 1,7 | |
| Ex. 3.3 | St | AMe | - | 4200 | 1,8 | |
| Ex. 3.4 | St | AMe | St | 6200 | 2 | |
| Ex. 3.5 | AMe | St | - | 3750 | 1,8 | |
| Ex. 3.6 | AEt | AVM | - | 5600 | 1,4 | 92,3 % |
| Ex. 3.7 | AEt | AtBu | - | 6800 | 1,7 | 97,8 % |
| Ex. 3.8 | AtBu | AVM | - | 6900 | 1,5 | 83,8 % |
| Ex. 3.9 | AtBu | AEt | - | 7000 | 2,0 | 96,1 % |
| Ex. 3.10 | AEt | St | - | 7600 | 1,8 | 98,4% |
| Ex. 3.11 | AtBu | St | - | 8100 | 2,9 | 95,9 % |
| Ex. 3.12 | AEt | AtBu | St | 13 000 | 2,4 | 97,5 % |
| Ex. 3.13 | St | AEt | - | 6200 | 1,9 | >99 % |
| Ex. 3.14 | St | AtBu | - | 7100 | 1,9 | > 99 % |
| Ex. 3.15 | AtBu | AEt | St | 11 400 | 2,4 | > 99 % |
| Ex. 3.17 | AtBu | AVM | - | 7400 | 1,4 | 88 % |
| Ex. 3.18 | ABu | AEt | - | 8700 | 2,2 | 95 % |
| Ex. 3.19 | ABu | AEt | - | 10 000 | 2,0 | 80 % |

## Revendications

1. Procédé de préparation de polymères à blocs de formule générale (I) : 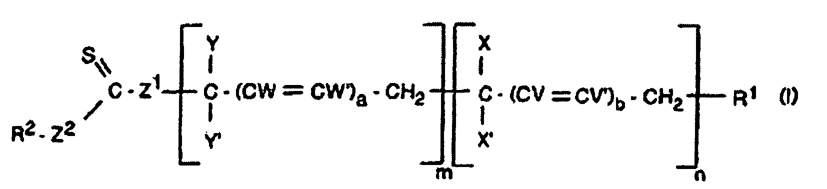 dans laquelle :
- Z¹=S,
- Z² =O, ou S,
- R¹ et R², identiques ou différents, représentent :
- un groupe (i) alkyle, acyle, aryle, alcéne ou alcyne éventuellement substitué, ou
- un cycle (ii) carboné, saturé ou non, éventuellement substitué ou aromatique, ou
- un hétérocycle (iii), saturé ou non, éventuellement substitué,
ces groupes et cycles (i), (ii) et (iii) pouvant être substitués par des groupes phényles substitués, des groupes aromatiques substitués ou des groupes alkoxycarbonyle ou aryloxycarbonyle (-COOR), carboxy (-COOH), acyloxy (-O₂CR), carbamoyle (- CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, allyle, époxy, alkoxy (-OR), S-alkyle, S- aryle, des groupes présentant un caractère hydrophile ou ionique tels que les sels alcalins d'acides carboxyliques, les sels alcalins d'acide sulfonique, les chaines polyoxyde d'alkylène (POE, POP), les substituants cationiques (sels d'ammonium quatemaires),
R représentant un groupe alkyle ou aryle,
- une chaîne polymère,
- V, V', W et W', identiques ou différents, représentent : H, un groupe alkyle ou un halogène,
- X, X', Y et Y', identiques ou différents, représentent H, un halogène ou un groupe R³, OR³, O₂COR³, NHCOH, OH, NH₂, NHR³, N(R³)₂, (R³)₂N⁺O⁻, NHCOR³, CO₂H, CO₂R³, CN, CONH₂, CONHR³ ou CONR³₂, dans lesquels R³ est choisi parmi les groupes alkyle, aryle, aralkyle, alkaryle, alcène ou organosilyle, éventuellement perfluorés et éventuellement substitués par un ou plusieurs groupes carboxyle, époxy, hydroxyle, alkoxy, amino, halogène ou sulfonique,
- a et b, identiques ou différents, valent 0 ou 1,
- m et n, identiques ou différents, sont supérieurs ou égaux à 1, et lorsque l'un ou l'autre est supérieur à 1, les motifs unitaires répétitifs sont identiques ou différents,
procédé dans lequel on met en contact :
- un monomère éthyléniquement insaturé de formule : CYY' (= CW -CW')ₐ = CH₂,
- un composé précurseur de formule générale (II) : 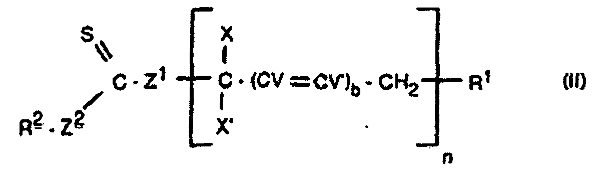
- un initiateur de polymérisation radicalaire.

2. Procédé selon la revendication 1, **caractérisé en ce que** le monomère éthyléniquement insaturé est choisi parmi : le styrène ou ses dérivés, le butadiène, le chloroprène, les esters (méth) acryliques et les nitriles vinyliques.

3. Procédé selon la revendication précédente, **caractérisé en ce que** le monomère éthyléniquement insaturé est choisi parmi l'acétate de vinyle, le versatate de vinyle et le propionate de vinyle,

4. Procédé selon l'une quelconque des revendications précédentes, **caractérisé en ce que** R¹ représente :
- un groupe de formule CR'¹R'²R'³, dans laquelle :
- R'¹, R'² et R'³ représentent des groupes (i), (ii) ou (iii) tels que définis ci-dessus, ou
- R'¹ = R'² = H et R'³ est un groupe aryle, alcène ou alcyne,
- ou un groupe - COR'⁴ dans lequel R'⁴ représente un groupe (i), (ii) ou (iii).

5. Procédé selon l'une quelconque des revendications précédentes, **caractérisé en ce que** R² représente un groupe de formule : - CH₂R'⁵, dans laquelle R'⁵ représente H ou un groupe (i), (ii) ou (iii) à l'exception des groupes aryle, alcyne et alcène.

6. Procédé selon l'une quelconque des revendications précédentes, **caractérisé en ce que** Z¹ est un atome de soufre et Z² est un atome d'oxygène.

7. Procédé selon la revendication précédente, **caractérisé en ce que** :
- R¹ est choisi parmi les groupes : 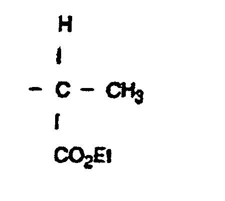 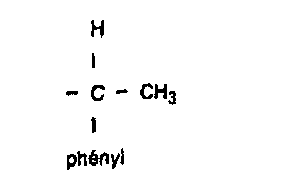 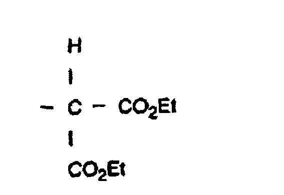 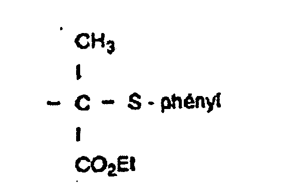 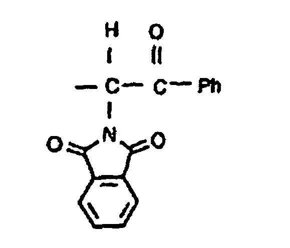
- et R² est un groupe éthyl ou phényl.

8. Procédé selon l'une quelconque des revendications précédentes, **caractérisé en ce que** les composés (II) sont choisis parmi les homopolymères de styrène (Y'= H, Y = C₆H₅, b = 0), d'acrylate de méthyle (Y'= H, Y = COOMe, b = 0), d'acrylate d'éthyle (Y'= H, Y = COOEt, b = 0), d'acrylate de butyle (Y' H, Y = COOBu, b = 0), d'acrylate de tertiobutyle (Y'= H, Y = COOtBu, b = 0), d'acétate de vinyle (Y'= H, Y = OCOMe, b = 0), d'acide acrylique (Y'= H, Y = COOH, b = 0), pour lesquels :
- Z¹ = S, Z² = O, R¹ = CHCH₃(CO₂Et) et R² = Et, ou
- Z¹ = S. Z² = O, R¹ = CH(CO₂Et)₂ et R² = Et.

9. Procédé selon l'une quelconque des revendications précédentes, **caractérisé en ce que** le composé précurseur de formule générale (II) est un polymère, et **en ce que** ledit polymère est issu de la polymérisation radicalaire d'un monomère éthyléniquement insaturé de formule : CXX' (= CV - CV')_{b} = CH₂ au cours de laquelle ledit monomère est mis en contact avec un initiateur de polymérisation radicalaire et un composé de formule générale (III), (IV) ou (V) : 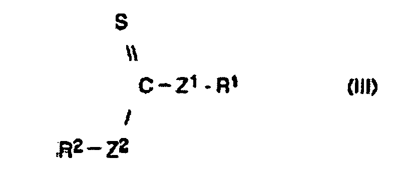 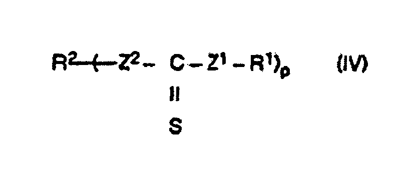 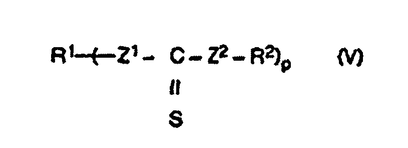 p étant compris entre 2 et 10.

10. Procédé selon la revendication précédente, **caractérisé en ce que** le composé (III) est choisi parmi le a-(O-éthylxanthyl) propionate d'éthyle (Z¹ = S, Z² = O, R¹ = CHCH₃ (CO₂Et), R² = Et) et le [1-(O-éthylxanthyl)malonate (Z¹ = S, Z² = O, R¹ = CH(CO₂ Et) ₂, R² = Et).

11. Procédé de préparation de polymères à blocs, **caractérisé en ce qu'**on répète au moins une fois la mise en oeuvre du procédé selon l'une des revendications 1 à 10 en utilisant:
- des monomères différents de la mise en oeuvre précédente, et
- à la place du composé précurseur de formule (II) le polymère à blocs issu de la mise en oeuvre précédente.

12. Polymère à blocs susceptible d'être obtenu par le procédé selon l'une des revendications 1 à 10 ou 11.

13. Polymère à blocs selon la revendication précédente, **caractérisé en ce qu'**il présente un indice de polydispersité d'au plus 2.

14. Polymère à blocs selon la revendication 12 ou 13, **caractérisé en ce qu'**il présente un indice de polydispersité d'au plus 1,5.

15. Polymère à blocs selon l'une quelconque des revendications 12 à 14, **caractérisé en ce qu'**il est de formule générale (1) dans laquelle Z¹ est un atome de soufre et Z² est un atome d'oxygène.

16. Polymère à blocs selon l'une quelconque des revendications 12 à 15, **caractérisé en ce qu'**ils présentent au moins deux blocs polymères choisis parmi les associations suivantes :
- polystyrène/polyacrylate de méthyle
- polystyrène/polyacrylate d'éthyle,
- polystyrène/polyacrylate de tertiobutyle,
- polyacrylate d'éthyle/polyacétate de vinyle,
- polyacrylate de butyle/polyacétate de vinyle
- polyacrylate d'éthylelpolyacrylate de tertiobutyle.
- polyacrylate de tertiobutyle/polyacétate de vinyle,
- polyacrylate d'éthyle/polyacrylate de butyle,
- polyacrylate de butyle/alcool polyvinylique,
- polyacide acrylique/alcool polyvinylique.

17. Polymère à blocs selon la revendication 16, **caractérisé en ce qu'**il est de formule générale (I), dans laquelle :
- Z¹ = S, Z² = O, R¹ =CHCH₃(CO₂Et) et R² = Et, ou
- Z¹ = S, Z² = O, R¹ = CH(CO₂Et)₂ et R² = Et.

18. Polymère susceptible d'être obtenu par le procédé qui consiste à mettre en contact un monomère éthyléniquement insaturé de formule: CXX' (= CV - CV')_{b} = CH₂, un initiateur de polymérisation radicalaire et un composé de formule (III), (IV) ou (V).

19. Polymère selon la revendication 18, **caractérisé en ce qu'** il présente un indice de polydispersité d'au plus 2.

20. Polymère selon la revendication 18 ou 19, **caractérisé en ce qu'** il présente un indice de polydispersité d'au plus 1,5.

21. Polymère selon l'une quelconque des revendications 18 à 20, **caractérisé en ce qu'**il est de formule générale (II) dans laquelle Z¹ est un atome de soufre, Z² est un atome d'oxygène et **en ce que** n est supérieur ou égal à 6.

22. Polymère selon l'une quelconque des revendications 20 ou 21, **caractérisé en ce qu'**il est choisi parmi les polymères de styrène (Y'= H, Y = C₆H₅, b = 0), d'acrylate de méthyle (Y'= H, Y = COOMe, b = 0), d'acrylate d'éthyle (Y'= H, Y = COOEt, b = 0), d'acrylate de butyle (Y'= H, Y = COOBu, b = 0), d'acrylate de tertiobutyle (Y'= H, Y = COOtBu, b = 0), d'acétate de vinyle (Y'= H, Y = OCOMe, b = 0), d'acide acrylique (Y'= H, Y = COOH, b = 0), pour lesquels :
- Z¹ = S, Z² = O, R¹ = CHCH₃(CO₂Et) et R² = Et, ou
- Z¹ = S, Z² = O, R¹ = CH(CO₂Et)₂ et R² = Et.

## Claims

1. A process for preparing block polymers with general formula (I) : 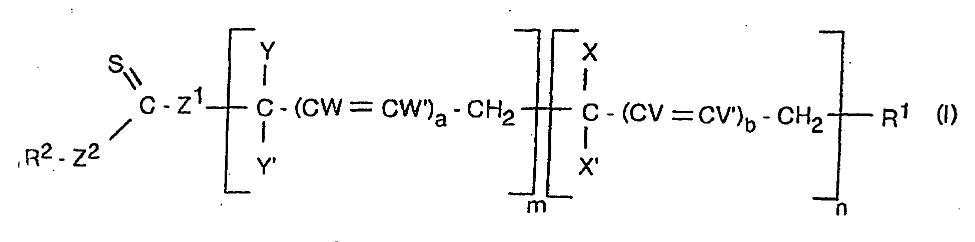 in which:
• Z¹ = S;
• Z²= O or S;
• R¹ and R², which may be identical or different, represent:
• an alkyl, acyl, aryl, alkene or alkyne group (i), which is optionally substituted; or
• a saturated or unsaturated, optionally substituted or aromatic carbon-containing cycle (ii); or
• a saturated or unsaturated, optionally substituted heterocycle (iii);
said groups and cycles (i), (ii) and (iii) possibly being substituted with substituted phenyl groups, substituted aromatic groups or groups: alkoxycarbonyl or aryloxycarbonyl (-COOR), carboxy (-COOH), acyloxy (-O₂CR), carbamoyl (-CONR₂), cyano (-CN), alkylcarbonyl, alkylarylcarbonyl, arylcarbonyl, arylalkylcarbonyl, phthalimido, maleimido, succinimido, amidino, guanidino, hydroxy (-OH), amino (-NR₂), halogen, allyl, epoxy, alkoxy (-OR), S-alkyl, S-aryl, groups with a hydrophilic or ionic nature such as alkali salts of carboxylic acids, alkali salts of sulphonic acid, polyoxyalkylene chains (POE, POP), or cationic substituents (quaternary ammonium salts);
R representing an alkyl or aryl group;
• a polymer chain;
• V, V', W and W', which may be identical or different, represent: H, an alkyl group or a halogen atom;
• X, X', Y and Y', which may be identical or different, represent H, a halogen or a group R³, OR³, O₂COR³, NHCOH, OH, NH₂, NHR³, N(R³)₂, (R³)₂N⁺O⁻, NHCOR³, CO₂H, CO₂R³, CN, CONH₂, CONHR³ or CONR³₂, in which R³ is selected from alkyl, aryl, aralkyl, alkaryl, alkene or organosilyl groups, optionally perfluorinated and optionally substituted with one or more carboxyl, epoxy, hydroxyl, alkoxy, amino, halogen or sulphonic groups;
• a and b, which may be identical or different, equal 0 or 1;
• m and n, which may be identical or different, equal 1 or more, and when one or the other is more than 1, the individual repeating units are identical or different;
in which process the following are brought into contact:
• an ethylenically unsaturated monomer with formula: CYY'(=CW-CW')ₐ=CH₂;
• a precursor compound with general formula (II): 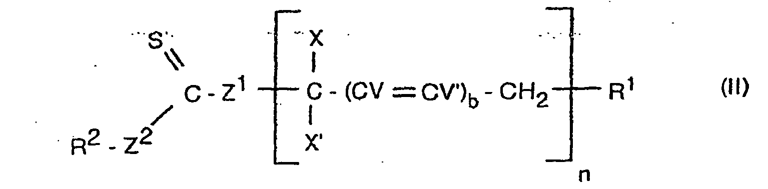
• a radical polymerisation initiator.

2. A process according to claim 1, **characterized in that** the ethylenically unsaturated monomer is selected from: styrene or its derivatives, butadiene, chloroprene, (meth)acrylic esters and vinyl nitriles.

3. A process according to the preceding claims, **characterized in that** the ethylenically unsaturated monomer is selected from vinyl acetate, vinyl versatate and vinyl propionate.

4. A process according to any one of the preceding claims, **characterized in that** R¹ represents:
• a group with formula CR'¹R'²R'³ in which:
• R'¹, R'² , and R'³ represent groups (i), (ii) or (iii) as defined above, or
• R'¹= R'² = H and R'³ is an aryl, alkene or alkyne group;
• or a -COR'⁴ group in which R'⁴ represents a group (i), (ii) or (iii).

5. A process according to any one of the preceding claims, **characterized in that** R² represents a group with formula: -CH₂R'⁵, in which R'⁵ represents H or a group (i), (ii) or (iii) with the exception of aryl, alkyne and alkene groups.

6. A process according to any one of the preceding claims, **characterized in that** Z¹ is a sulphur atom and Z² is an oxygen atom.

7. A process according to the preceding claim, **characterized in that**:
• R¹ is selected from the following groups: 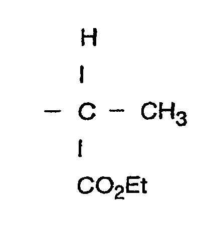 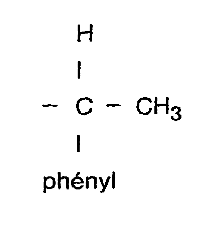 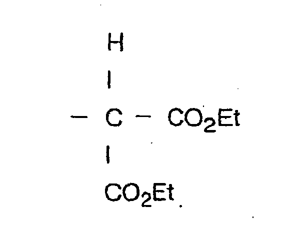 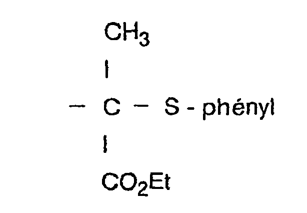 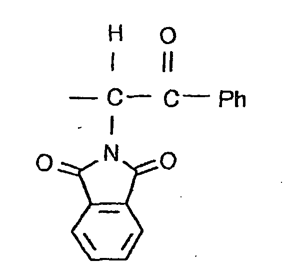
• and R² is an ethyl or phenyl group.

8. A process according to any one of the preceding claims, **characterized in that** compounds (II) are selected from homopolymers of styrene (Y' = H, Y = C₆H₅, b = 0), methyl acrylate (Y' = H, Y = COOMe, b = 0), ethyl acrylate (Y' = H, Y = COOEt, b = 0), butyl acrylate (Y' = H, Y = COOBu, b = 0), tertiobutyl acrylate (Y' = H, Y = COOtBu, b = 0), vinyl acetate (Y' = H, Y = OCOMe, b = 0), acrylic acid (Y' = H, Y = COOH, b = 0), for which:
• Z¹ = S, Z² = O, R¹ = CHCH₃(CO₂Et) and R² = Et; or
• Z¹ = S, Z² = O, R¹ = CH(CO₂Et)₂ and R² = Et.

9. A process according to any one of the preceding claims, **characterized in that** the precursor compound with general formula (II) is a polymer, and **in that** said polymer results from radical polymerisation of an ethylenically unsaturated monomer with formula: CXX'(=CV-CV')_{b}=CH₂ during which said monomer is brought into contact with a radical polymerisation initiator and a compound with general formula (III), (IV) or (V): 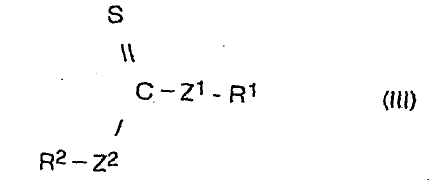 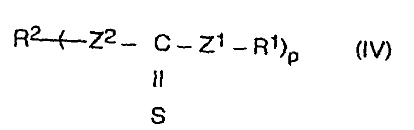 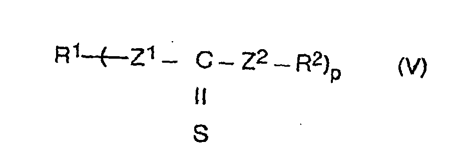 in which p is in the range 2 to 10.

10. A process according to the preceding claim, **characterized in that** compound (III) is selected from ethyl α-(O-ethylxanthyl)propionate (Z¹ = S, Z² = O, R¹ = CHCH₃(CO₂Et), R² = Et) and [1-(O-ethylxanthyl)malonate (Z¹ = S, Z² = O, R¹ = CH(CO₂Et)₂, R² = Et).

11. A process for preparing block polymers, **characterized in that** the process according to one of claims 1 to 10 is repeated at least once using:
• monomers that differ from the preceding implementation; and
• the block polymer from the preceding implementation in place of the precursor compound with formula (II).

12. A block polymer that can be obtained by the process according to one of claims 1 to 10 or 11.

13. A block polymer according to the preceding claim, **characterized in that** it has a polydispersity index of at most 2.

14. A block polymer according to claim 12 or claim 13, **characterized in that** it has a polydispersity index of at most 1.5.

15. A block polymer according to any one of claims 12 to 14, **characterized in that** it has general formula (I) in which Z¹ is a sulphur atom and Z² is an oxygen atom.

16. A block polymer according to any one of claims 12 to 15, **characterized in that** they *exhibit at least two polymer blocks selected from the following associations:
• polystyrene/polymethylacrylate;
• polystyrene/polyethylacrylate;
• polystyrene/polytertiobutylacrylate;
• polyethylacrylate/polyvinylacetate;
• polybutylacrylate/polyvinylacetate;
• polyethylacrylate/polytertiobutylacrylate;
• polytertiobutylacrylate/polyvinylacetate;
• polyethylacrylate/polybutyl acrylate;
• polybutylacrylate/polyvinyl alcohol;
• polyacrylic acid/polyvinyl alcohol.

17. A block polymer according to claim 16, **characterized in that** it has general formula (I) in which:
• Z¹ = S, Z² = O, R¹ = CHCH₃(CO₂Et) and R² = Et; or
• Z¹ = S, Z² = O, R¹ = CH(CO₂Et)₂ and R² = Et.

18. A polymer that can be obtained by a process consisting of bringing the following into contact: an ethylenically unsaturated monomer with formula: CXX'(=CV-CV')_{b}=CH₂, a radical polymerisation initiator and a compound with formula (III), (IV) or (V).

19. A polymer according to claim 18, **characterized in that that** it has a polydispersity index of at most 2.

20. A block polymer according to claim 18 or claim 19, **characterized in that** it has a polydispersity index of at most 1.5.

21. A polymer according to any one of claims 18 to 20, **characterized in that** it has general formula (II) in which Z¹ is a sulphur atom, Z² is an oxygen atom and **in that** n is 6 or more.

22. A polymer according to claim 20 or claim 21, **characterized in that** it is selected from the polymers of styrene (Y' = H, Y = C₆H₅, b = 0), methyl acrylate (Y' = H, Y = COOMe, b = 0), ethyl acrylate (Y' = H, Y = COOEt, b = 0), butyl acrylate (Y' = H, Y = COOBu, b = 0), tertiobutyl acrylate (Y' = H, Y = COOtBu, b = 0), vinyl acetate (Y' = H, Y = OCOMe, b = 0), acrylic acid (Y' = H, Y = COOH, b = 0), for which:
• Z¹ = S, Z² = O, R¹ = CHCH₃(CO₂Et) and R² = Et; or
• Z¹ = S, Z² = O, R¹ = CH(CO₂Et)₂ and R² = Et.

## Patentansprüche

1. Verfahren zur Herstellung von Blockpolymeren der allgemeinen Formel (I): 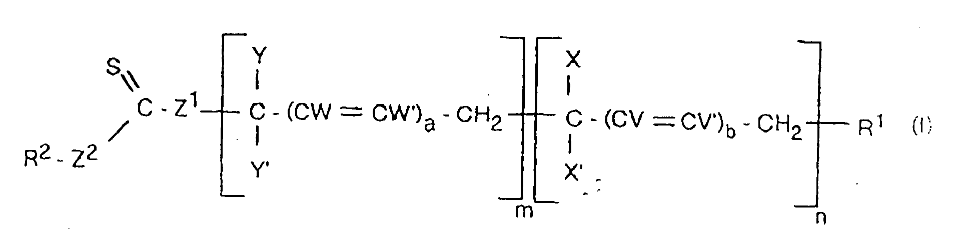 in welcher:
- Z¹ = S,
- Z² = O oder S,
- R¹ und R², welche gleich oder verschieden sind, stehen für:
(i) eine Alkyl-, Acyl-, Aryl-, Alken- oder Alkingruppe, welche gegebenenfalls substituiert ist, oder
(ii) einen Kohlenstoffzyklus, welcher gesättigt ist oder nicht, der gegebenenfalls substituiert oder aromatisch ist, oder
(iii) einen Heterozyklus, der gesättigt ist oder nicht, welcher gegebenenfalls substituiert ist,
wobei die Gruppen und Zyklen (i), (ii) und (iii) substituiert sein können durch substituierte Phenylgruppen, aromatische substituierte Gruppen oder die Gruppen: Alkoxycarbonyl oder Aryloxycarbonyl (-COOR), Carboxy (-COOH), Acyloxy (-O₂CR), Carbamoyl (-CONR₂), Cyano (-CN), Alkylcarbonyl, Alkylarylcarbonyl, Arylcarbonyl, Arylalkylcarbonyl, Phtalimido, Maleimido, Succinimido, Amidino, Guanidimo, Hydroxy (-OH), Amino (-NR₂), Halogen, Allyl, Epoxy, Alkoxy (-OR), S-Alkyl, S-Aryl, Gruppen, die einen hydrophilen oder ionischen Charakter aufweisen, wie beispielsweise die Alkalisalze von Carbonsäuren, die Alkalisalze von Sulfonsäure, die (Poly)alkylenoxidketten (POE, POP), die kationischen Substituenten (quarternäre Ammoniumsalze),
wobei R für eine Alkyl- oder Arylgruppe steht,
eine Polymerkette,
- V, V', W und W', die gleich oder verschieden sind, stehen für: H, eine Alkylgruppe oder ein Halogen,
- X, X', Y und Y', die gleich oder verschieden sind, stehen für: H, ein Halogen oder eine Gruppe R³, OR³, O₂COR³, NHCOH, OH, NH₂, NHR³, N(R³)₂, (R³)₂N⁺O⁻, NHCOR³, CO₂H, CO₂R³, CN, CONH₂, CONHR³ oder CONR³₂, in welchen R³ ausgewählt ist aus den Alkyl-, Aryl-, Aralkyl-, Alkaryl-, Alken- oder Organosilylgruppen, welche gegebenenfalls perfluoriert sind und gegebenenfalls substituiert sind mit einer oder mehreren Carboxyl-, Epoxy-, Hydroxyl-, Alkoxy-, Amino-, Halogen- oder Sulfongruppen,
- a und b, die gleich oder verschieden sind, 0 oder 1 sind,
- m und n, die gleich oder verschieden sind, größer oder gleich 1 sind und, wenn einer davon größer als 1 ist, die sich wiederholenden Einheitsmotive gleich oder verschieden sind,
wobei man bei dem Verfahren in Kontakt bringt:
- ein ethylenisch ungesättigtes Monomer der Formel: CYY'(=CW-CW')ₐ=CH₂,
- eine Vorläuferverbindung der allgemeinen Formel (II): 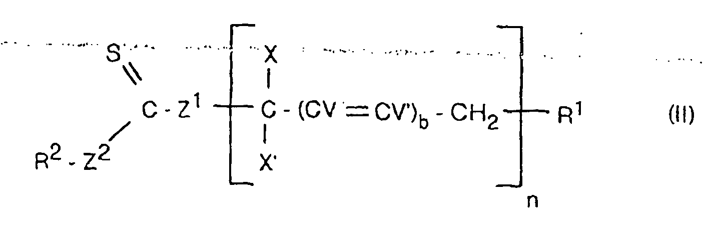
- einen Starter für die radikalische Polymerisation.

2. Verfahren nach Anspruch 1, **dadurch gekennzeichnet, dass** das ethylenisch ungesättigte Monomer ausgewählt wird aus: dem Styrol oder seinen Derivaten, dem Butadien, dem Chloropren, den (Meth)acrylsäureestern und den Vinylnitrilen.

3. Verfahren nach dem vorhergehenden. Anspruch, **dadurch gekennzeichnet, dass** das ethylenisch ungesättigte Monomer ausgewählt wird aus Vinylacetat, Vinylversatat und Vinylpropionat.

4. Verfahren nach irgendeinem der vorhergehenden Ansprüche, **dadurch gekennzeichnet, dass** R¹ steht für:
- eine Gruppe der Formel CR^{'1}R^{'2}R^{'3}, in welcher:
· R^{'1}, R^{'2} und R^{'3} für die Gruppen (i), (ii) oder (iii) stehen, wie sie obenstehend definiert wurden, oder
· R^{'1} = R^{'2} = H und R^{'3} eine Aryl-, Alken- oder Alkingruppe ist,
- oder eine Gruppe -COR^{'4}, in welcher R^{'4} für eine Gruppe (i), (ii) oder (iii) steht.

5. Verfahren nach irgendeinem der vorhergehenden Ansprüche, **dadurch gekennzeichnet, dass** R² für eine Gruppe mit der Formel: -CH₂R^{'5} steht, in welcher R^{'5} für H oder eine Gruppe (i), (ii) oder (iii), mit Ausnahme von Aryl-, Alkin- und Alkengruppen, steht.

6. Verfahren nach irgendeinem der vorhergehenden Ansprüche, **dadurch gekennzeichnet, dass** Z¹ ein Schwefelatom ist und Z² ein Sauerstoffatom ist.

7. Verfahren nach dem vorhergehenden Anspruch, **dadurch gekennzeichnet, dass**:
- R¹ ausgewählt wird aus den Gruppen: 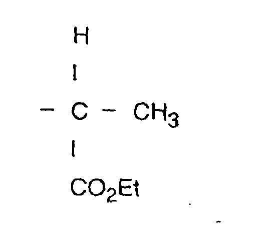 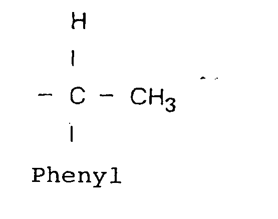 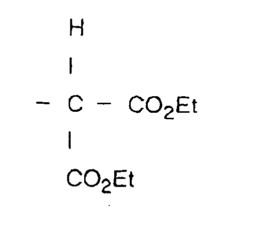 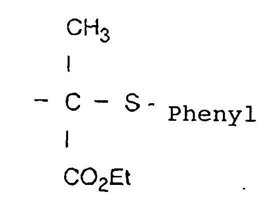 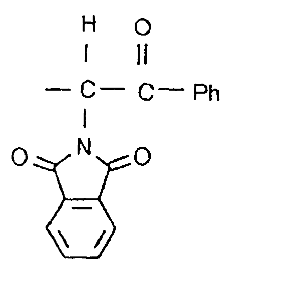
- und R² eine Ethyl- oder Phenylgruppe ist.

8. Verfahren nach irgendeinem der vorhergehenden Ansprüche, **dadurch gekennzeichnet, dass** die Verbindungen (II) ausgewählt werden aus den Homopolymeren von Styrol (Y' = H, Y = C₆H₅, b = 0), Methylacrylat (Y' = H, Y = COOMe, b = 0), Ethylacrylat (Y' = H, Y = COOEt, b = 0), Butylacrylat (Y' = H, Y = COOBu, b = 0), Tertiärbutylacrylat (Y' = H, Y = COOtBu, b = 0), Vinylacetat (Y' = H, Y = OCOMe, b = 0), Acrylsäure (Y' = H, Y = COOH, b = 0), für welche:
- Z¹ = S, Z² = O, R¹ = CHCH₃(CO₂Et) und R² = Et oder
- Z¹ = S, Z² = O, R¹ = CH(CO₂Et)₂ und R² = Et.

9. Verfahren nach irgendeinem der vorhergehenden Ansprüche, **dadurch gekennzeichnet, dass** die Vorläuferverbindung der allgemeinen Formel (II) ein Polymer ist und dass dieses Polymer aus der radikalischen Polymerisation eines ethylenisch ungesättigten Monomers der Formel: CXX' (= CV - CV')_{b} = CH₂ stammt, während welcher dieses Monomer mit einem Starter der radikalischen Polymerisation und einer Verbindung der allgemeinen Formel (III), (IV) oder (V): 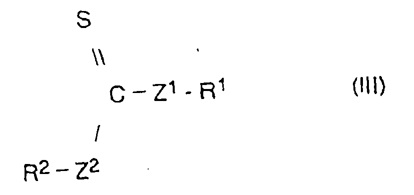 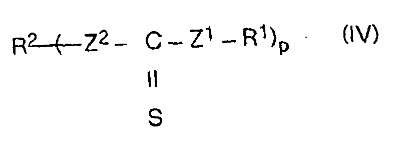 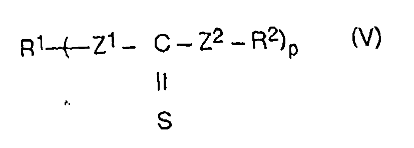 in Kontakt gebracht wird, wobei p zwischen 2 und 10 liegt.

10. Verfahren nach dem vorhergehenden Anspruch, **dadurch gekennzeichnet, dass** die Verbindung (III) ausgewählt wird aus dem Ethyl-α-(O-ethylxanthyl)propionat (Z¹ = S, Z² = O, R¹ = CHCH₃(CO₂Et), R²= Et) und dem [1-(O-Ethylxanthyl)malonat (Z¹ = S, Z² = O, R¹ = CH(CO₂Et)₂, R² = Et).

11. Verfahren zur Herstellung von Blockpolymeren, **dadurch gekennzeichnet, dass** man wenigstens einmal die Durchführung des Verfahrens nach einem der Ansprüche 1 bis 10 wiederholt, wobei man verwendet:
- Monomere, die von der vorhergehenden Durchführung verschieden sind, und
- anstelle der Vorläuferverbindung der Formel (II) das Blockpolymer, das aus der vorhergehenden Durchführung stammt.

12. Blockpolymer, welches durch das Verfahren nach einem der Ansprüche 1 bis 10 oder 11 erhältlich ist.

13. Blockpolymer nach dem vorhergehenden Anspruch, **dadurch gekennzeichnet, dass** dieses einen Polydispersitätsindex von höchstens 2 aufweist.

14. Blockpolymer nach dem Anspruch 12 oder 13, **dadurch gekennzeichnet, dass** dieses einen Polydispersitätsindex von höchstens 1,5 aufweist.

15. Blockpolymer nach irgendeinem der Ansprüche 12 bis 14, **dadurch gekennzeichnet, dass** es die allgemeine Formel (I) aufweist, in welcher Z¹ ein Schwefelatom ist und Z² ein Sauerstoffatom ist.

16. Blockpolymer nach irgendeinem der Ansprüche 12 bis 15, **dadurch gekennzeichnet, dass** dieses wenigstens 2 Blockpolymere aufweist, die ausgewählt sind aus den folgenden Kombinationen:
- Polystyrol/Polymethylacrylat,
- Polystyrol/Polyethylacrylat,
- Polystyrol/Polytertiärbutylacrylat,
- Polyethylacrylat/Polyvinylacetat,
- Polybutylacrylat/Polyvinylacetat,
- Polyethylacrylat/Polytertiärbutylacrylat,
- Polytertiärbutylacrylat/Polyvinylacetat,
- Polyethylacrylat/Polybutylacrylat,
- Polybutylacrylat/Polyvinylalkohol,
- Polyacrylsäure/Polyvinylalkohol.

17. Blockpolymer nach Anspruch 16, **dadurch gekennzeichnet, dass** es die allgemeine Formel (I) aufweist, in welcher:
- Z¹ = S, Z² = O, R¹ = CHCH₃(CO₂Et) und R² = Et oder
- Z¹ = S, Z² = O, R¹ = CH(CO₂Et)₂ und R² = Et.

18. Polymer, welches erhältlich ist durch das Verfahren, welches aus einem Inkontaktbringen eines ethylenisch ungesättigten Monomers der Formel: CXX' (=CV - CV')_{b} = CH₂, eines Starters der radikalischen Polymerisation und einer Verbindung der Formel (III), (IV) oder (V) besteht.

19. Polymer nach Anspruch 18, **dadurch gekennzeichnet, dass** dieses einen Polydispersitätsindex von höchstens 2 aufweist.

20. Polymer nach Anspruch 18 oder 19, **dadurch gekennzeichnet, dass** dieses einen Polydispersitätsindex von höchstens 1,5 aufweist.

21. Polymer nach irgendeinem der Ansprüche 18 bis 20, **dadurch gekennzeichnet, dass** es die allgemeine Formel (II) aufweist, in welcher Z¹ ein Schwefelatom ist, Z² ein Sauerstoffatom ist, und dass n größer oder gleich 6 ist.

22. Polymer nach irgendeinem der Ansprüche 20 oder 21, **dadurch gekennzeichnet, dass** dieses ausgewählt ist aus den Polymeren von Styrol (Y' = H, Y = C₆H₅, b = 0), Methylacrylat (Y' = H, Y = COOMe, b = 0), Ethylacrylat (Y' = H, Y = COOEt, b = 0), Butylacrylat (Y' = H, Y = COOBu, b = 0), Tertiärbutylacrylat (Y' = H, Y = COOtBu, b = 0), Vinylacetat (Y' = H, Y = OCOMe, b = 0), Acrylsäure (Y' = H, Y = COOH, b = 0), für welche:
- Z¹ = S, Z² = 0, R¹ = CHCH₃(CO₂Et) und R² = Et oder
- Z¹ = S, Z² = O, R¹ = CH(CO₂Et)₂ und R² = Et.
